(19) Europäisches Patentamt
European Patent Office
Office européen des brevets

(11) **EP 4 019 856 B1**

(12) **EUROPEAN PATENT SPECIFICATION**

(45) Date of publication and mention
of the grant of the patent:
**02.04.2025   Bulletin 2025/14**

(21) Application number: **19941961.5**

(22) Date of filing: **19.08.2019**

(51) International Patent Classification (IPC):
*F24F 11/46* (2018.01)   *F24F 140/60* (2018.01)
*F24F 11/52* (2018.01)   *F24F 11/63* (2018.01)
*F24F 11/64* (2018.01)   *F24F 11/89* (2018.01)
*F24F 140/50* (2018.01)

(52) Cooperative Patent Classification (CPC):
**F24F 11/52; F24F 11/46; F24F 11/63; F24F 11/64;
F24F 11/89;** F24F 2140/50; F24F 2140/60

(86) International application number:
**PCT/JP2019/032251**

(87) International publication number:
**WO 2021/033231 (25.02.2021 Gazette 2021/08)**

(54) **INFORMATION PROCESSING DEVICE**

INFORMATIONSVERARBEITUNGSVORRICHTUNG

DISPOSITIF DE TRAITEMENT D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.06.2022   Bulletin 2022/26**

(73) Proprietor: **MITSUBISHI ELECTRIC
CORPORATION
Chiyoda-ku
Tokyo 100-8310 (JP)**

(72) Inventors:
• **MOTODANI, Mio**
**Tokyo 100-8310 (JP)**
• **SAWADA, Masae**
**Tokyo 100-8310 (JP)**
• **SUNG, Anna**
**Tokyo 100-8310 (JP)**
• **HASHIKAWA, Takahiro**
**Tokyo 100-8310 (JP)**
• **HAMADA, Mamoru**
**Tokyo 100-8310 (JP)**

(74) Representative: **Meissner Bolte Partnerschaft
mbB
Patentanwälte Rechtsanwälte
Postfach 86 06 24
81633 München (DE)**

(56) References cited:
EP-A1- 3 040 633    EP-A2- 2 314 942
WO-A1-2017/208438    WO-A1-2018/182022
JP-A- 2008 128 599    JP-A- 2015 152 496
JP-A- 2015 203 544    JP-A- 2017 211 136

# EP 4 019 856 B1

**Description**

<u>TECHNICAL FIELD</u>

The present invention relates to an information processing apparatus that estimates a power consumption of equipment.

<u>BACKGROUND ART</u>

For the purpose of energy saving in air-conditioning apparatuses, various types of energy saving control have been developed. Effects of energy saving control differ depending on the performance of buildings and the use of air-conditioning apparatuses. Thus, a technique for calculating a numerical value indicating whether or not there is an energy saving effect and indicating the energy saving effect, on the basis of data collected at a target building for a specific period of time, has been known.

For example, an energy saving effect analysis apparatus disclosed in Patent Literature 1 obtains an energy saving effect by calculating in advance an average power consumption measured at an air-conditioning apparatus as a reference power consumption for each time and comparing the calculated reference power consumption with the current power consumption.

As described in Patent Literature 1, the reference power consumption may be calculated using a multiple regression formula in which outside air temperatures accumulated as operation data corresponding to a set temperature are used as explanatory variables, as well as using an average measured value.

As another example, an energy saving effect estimation method for calculating an effect by estimating a power consumption during a non-energy-saving operation on the basis of the relationship between power consumption data and outside air temperature during an energy-saving operation is suggested (see, for example, Patent Literature 2). In Patent Literature 2, the method described below is disclosed. First, a power consumption estimation formula for an energy-saving operation is created on the basis of power consumption information (for example, the current year) and outside air information during an energy-saving operation.

Next, on the basis of outside air information during a non-energy-saving operation period (for example, the previous year) and the power consumption estimation formula, a power consumption based on the assumption that an energy-saving operation was performed in the previous year is calculated. Then, an energy saving effect is calculated on the basis of the power consumption calculated based on the assumption that the energy-saving operation was performed in the previous year and power consumption information measured during the non-energy-saving operation period (the previous year). As another example, patent document WO-2018/182022-A describes an an air conditioning system including an outside unit, an indoor unit and a controller that controls the load coordination and energy saving performance of the units.

<u>LIST OF CITATIONS</u>

<u>PATENT LITERATURE</u>

| Patent Literature 1: | Japanese Unexamined Patent Application Publication JP 2009-20 824 A |
| Patent Literature 2: | Japanese Unexamined Patent Application Publication JP 2003-70 163 A |

<u>SUMMARY OF INVENTION</u>

<u>TECHNICAL PROBLEM</u>

However, the energy saving effect analysis apparatus disclosed in Patent Literature 1 estimates a reference power consumption on the basis of an average measured value or using a multiple regression formula. Thus, variations in power consumption generated under the same condition are not taken into consideration.

In the energy saving effect estimation method disclosed in Patent Literature 2, a power consumption is estimated using a formula of relation between outside air temperature information and a power consumption. This relation formula is represented by $P = a \times T + b$, where T represents outside air temperature and a and b represent coefficients. According to this relation formula, the same amount of power is consumed at the same outside air temperature. The power consumption of an air-conditioning apparatus varies according to the amount of heat load processed by the air-conditioning apparatus.

The amount of heat load includes a load that varies according to outside air temperature and a load that varies independently of outside air temperature. In the methods disclosed in Patent Literature 1 and Patent Literature 2, the load that varies independently of outside air temperature is not reflected, and accuracy of estimation of power consumption is thus degraded.

The present invention has been made to solve the problems described above and provides an information processing apparatus that estimates an energy saving effect while a load that varies independently of outside air temperature being taken into consideration.

SOLUTION TO PROBLEM

According to the invention, the problem is solved by the subject matter outlined in independent claim 1. Advantageous further developments of the invention are set forth in the dependent claims.

BRIEF DESCRIPTION OF DRAWINGS

The embodiment 2 is not according to the invention and is present for illustration purpose only.

[Fig. 1]  Fig. 1 is a schematic diagram illustrating an example of a configuration including an information processing apparatus according to Embodiment 1 and equipment.

[Fig. 2]  Fig. 2 is a refrigerant circuit diagram illustrating a configuration example of an air-conditioning apparatus illustrated in Fig. 1.

[Fig. 3]  Fig. 3 is a functional block diagram illustrating a configuration example of the information processing apparatus illustrated in Fig. 1.

[Fig. 4]  Fig. 4 is a flowchart of a procedure of an operation of an actual load factor calculation unit illustrated in Fig. 3.

[Fig. 5]  Fig. 5 is a diagram illustrating an example of a refrigerant flow rate data table.

[Fig. 6]  Fig. 6 is a diagram illustrating an example of an expansion valve characteristics data table.

FIG. 7  is a diagram illustrating an example of an evaporator inlet specific enthalpy data table.

FIG. 8  is a diagram illustrating an example of an evaporator outlet specific enthalpy data table.

FIG. 9  is a diagram illustrating an example of a condenser inlet specific enthalpy data table.

FIG. 10  is a diagram illustrating an example of a condenser outlet specific enthalpy data table.

FIG. 11  is a flowchart of a procedure of an operation of a load factor estimation unit illustrated in FIG. 3.

FIG. 12  is a diagram illustrating an example of outside air temperature and actual indoor unit load factors during an actual load data period.

FIG. 13  is a diagram illustrating an example of outside air temperature data indicating chronological changes of outside air temperature.

FIG. 14  is a graph of an example of an outside air temperature frequency distribution for an actual load data period.

FIG. 15  is a graph of an example of an outside air temperature frequency distribution for an estimation period.

FIG. 16  is a diagram illustrating an example of scale factors for outside air temperature frequencies.

FIG. 17  is a diagram illustrating an example of an actual two-dimensional frequency distribution created by a load factor distribution estimation part illustrated in FIG. 3.

FIG. 18  is a diagram illustrating an example of an estimated indoor unit load factor frequency distribution obtained by the load factor distribution estimation part illustrated in FIG. 3.

FIG. 19  is a flowchart of a procedure of an operation of a power consumption estimation unit illustrated in FIG. 3.

FIG. 20  is a flowchart of a procedure of an operation of the power consumption estimation unit illustrated in FIG. 3.

FIG. 21  is a diagram illustrating an example of a compressor power data table stored in a storage device illustrated in FIG. 3.

FIG. 22  is a diagram illustrating an example of a heat source fan power data table stored in the storage device illustrated in FIG. 3.

FIG. 23  is a diagram illustrating an example of an image displayed on an output device when a user enters data using an input device illustrated in FIG. 3.

FIG. 24  is a diagram illustrating an example of an image indicating an energy saving effect displayed on the output device illustrated in FIG. 3.

FIG. 25  is a diagram illustrating an example of an image for comparing energy saving effects in a chronological manner.

FIG. 26  is a diagram illustrating an example of an image indicating calculation conditions.

FIG. 27  is a functional block diagram illustrating a configuration example of an information processing apparatus according to Embodiment 2.

FIG. 28    is a diagram illustrating an example of an image displayed on an output device when a user enters data using an input device according to Embodiment 2.

FIG. 29    is a diagram illustrating another example of an image displayed on the output device when the user enters data using the input device according to Embodiment 2.

DESCRIPTION OF EMBODIMENTS

Embodiment 1

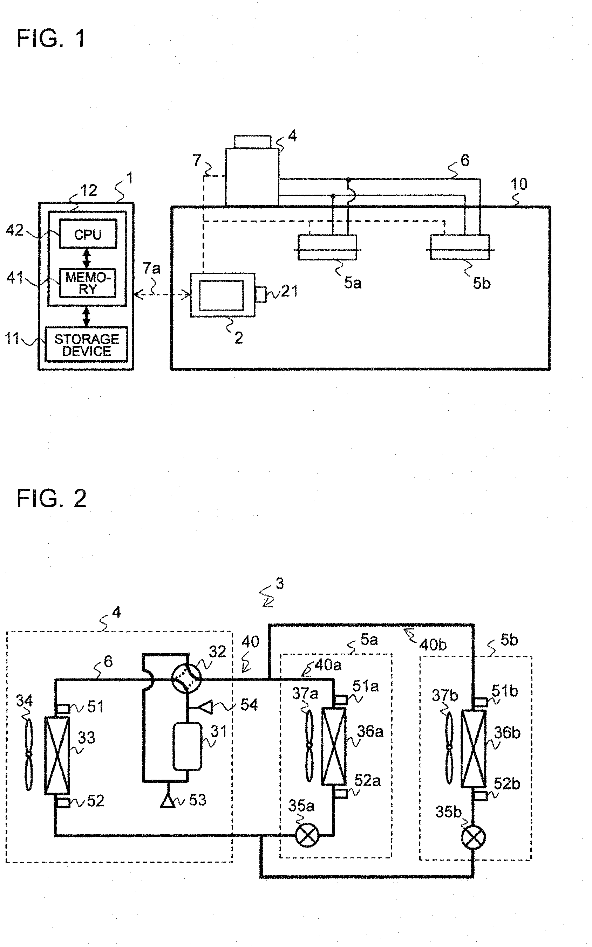

A configuration of an information processing apparatus according to Embodiment 1 will be described. FIG 1 is a schematic diagram illustrating an example of a configuration including an information processing apparatus according to Embodiment 1 and equipment. An information processing apparatus 1 calculates an energy saving effect of equipment. In Embodiment 1, a case where the equipment is an air-conditioning apparatus 3 will be described. The air-conditioning apparatus 3 includes an outdoor unit 4 that generates a heat source and indoor units 5a and 5b that use the generated heat source.

The information processing apparatus 1 is connected through communication to a controller 2 that controls the air-conditioning apparatus 3. The information processing apparatus 1 and the controller 2 may be connected through communication in a wired or wireless manner. In FIG. 1, a case where the information processing apparatus 1 and the controller 2 are connected by a transmission line 7a is illustrated.

The outdoor unit 4 is installed outside of an air-conditioned space 10 of the air-conditioning apparatus 3. The indoor units 5a and 5b are installed on the ceiling of a room serving as the air-conditioned space 10. The outdoor unit 4 and the indoor units 5a and 5b are connected by a refrigerant pipe 6. The outdoor unit 4 and the indoor units 5a and 5b are each connected to the controller 2 by a transmission line 7 dedicated to the air-conditioning apparatus. An air inlet (not illustrated in the drawing) through which indoor air of the air-conditioned space 10 is suctioned is arranged at the bottom face of each of the indoor units 5a and 5b, and an air outlet (not illustrated in the drawing) through which conditioned air is blown out to the air-conditioned space 10 is arranged around the air inlet.

The controller 2 is, for example, a microcomputer. The controller 2 includes a storage unit 21 and an arithmetic unit 22. The storage unit 21 stores operation data and measurement data of the air-conditioning apparatus 3. The arithmetic unit 22 outputs a control instruction for controlling a refrigeration cycle to the outdoor unit 4 and the indoor units 5a and 5b in accordance with an operation mode of the air-conditioning apparatus 3.

A refrigerant circuit of the air-conditioning apparatus 3 illustrated in FIG. 1 will be described. FIG. 2 is a refrigerant circuit diagram illustrating a configuration example of the air-conditioning apparatus illustrated in FIG. 1. The indoor units 5a and 5b have the same configuration. Thus, in this example, the configuration of the indoor unit 5a will be described. The outdoor unit 4 includes a compressor 31, a flow switching device 32, a heat-source-side heat exchanger 33, and a heat-source-side fan 34. The indoor unit 5a includes an expansion valve 35a, a use-side heat exchanger 36a, and a use-side fan 37a.

The heat-source-side fan 34 supplies outside air to the heat-source-side heat exchanger 33. The use-side fan 37a supplies air suctioned from the air-conditioned space 10 through the air inlet (not illustrated in the drawing) to the use-side heat exchanger 36a. The use-side fan 37a also sends air that has been subjected to heat exchange with refrigerant at the use-side heat exchanger 36a to the air-conditioned space 10 through the air outlet (not illustrated in the drawing).

The compressor 31 compresses sucked refrigerant and discharges the compressed refrigerant. The flow switching device 32 switches the direction in which refrigerant flows in a refrigerant circuit 40. Specifically, in the case of a cooling operation mode, the flow switching device 32 causes refrigerant that has been discharged from the compressor 31 to flow towards the heat-source-side heat exchanger 33.

In the case of a heating operation mode, the flow switching device 32 causes refrigerant that has been discharged from the compressor 31 to flow towards the use-side heat exchangers 36a and 36b. As described above, the air-conditioning apparatus 3 operates in the cooling operation mode or the heating operation mode. The flow switching device 32 is, for example, a four-way valve.

The heat-source-side heat exchanger 33 causes heat exchange to be performed between outside air and refrigerant. The use-side heat exchanger 36a exchanges heat between indoor air of the air-conditioned space 10 and refrigerant. The heat-source-side heat exchanger 33 and the use-side heat exchanger 36a are, for example, finned tube heat exchangers. The expansion valve 35a decompresses and expands refrigerant. The expansion valve 35a is, for example, an electronic expansion valve whose opening degree can be adjusted.

A pressure sensor 53 that detects low pressure of the refrigerant circuit 40 is provided near a refrigerant suction side of the compressor 31. A pressure sensor 54 that detects high pressure of the refrigerant circuit 40 is provided near a refrigerant discharge side of the compressor 31. Refrigerant temperature sensors 51 and 52 that detect temperature of refrigerant are provided at ends of the heat-source-side heat exchanger 33. In the case where the heat-source-side heat exchanger 33 functions as a condenser, the refrigerant temperature sensor 51 detects the temperature of refrigerant at the inlet side of the heat-source-side heat exchanger 33, and the refrigerant temperature sensor 52 detects the temperature of refrigerant at the outlet side of the heat-source-side heat exchanger 33.

In the case where the heat-source-side heat exchanger 33 functions as an evaporator, the refrigerant temperature sensor 51 detects the temperature of refrigerant at the outlet side of the heat-source-side heat exchanger 33, and the refrigerant temperature sensor 52 detects the temperature of refrigerant at the inlet side of the heat-source-side heat exchanger 33.

Refrigerant temperature sensors 51a and 52a that detect temperature of refrigerant are provided at ends of the use-side heat exchanger 36a. In the case where the use-side heat exchanger 36a functions as an evaporator, the refrigerant temperature sensor 52a detects the temperature of refrigerant at the inlet side of the use-side heat exchanger 36a, and the refrigerant temperature sensor 51a detects the temperature of refrigerant at the outlet side of the use-side heat exchanger 36a.

In the case where the use-side heat exchanger 36a functions as a condenser, the refrigerant temperature sensor 52a detects the temperature of refrigerant at the outlet side of the use-side heat exchanger 36a, and the refrigerant temperature sensor 51a detects the temperature of refrigerant at the inlet side of the use-side heat exchanger 36a.

The refrigerant temperature sensors 51, 51a, 51b, 52, 52a, and 52b are connected to the controller 2 by the transmission line 7. The pressure sensors 53 and 54 are connected to the controller 2 by the transmission line 7.

The compressor 31, the heat-source-side heat exchanger 33, the expansion valve 35a, and the use-side heat exchanger 36a are connected by the refrigerant pipe 6 and configure a refrigerant circuit 40a in which refrigerant circulates. The compressor 31, the heat-source-side heat exchanger 33, the expansion valve 35b, and the use-side heat exchanger 36b are connected by the refrigerant pipe 6 and configure a refrigerant circuit 40b in which refrigerant circulates. In 1, two refrigerant circuits, the refrigerant circuit 40a and the refrigerant circuit 40b, are configured. Hereinafter, the refrigerant circuits 40a and 40b will be referred to as the refrigerant circuit 40.

In Embodiment 1, a case where two indoor units are installed will be described. However, the number of indoor units installed is not limited. Only one indoor unit may be installed or three or more indoor units may be installed. Furthermore, although the arrangement in which the indoor units 5a and 5b are installed on the ceiling is illustrated in FIG. 1, the indoor units 5a and 5b may be installed on a wall or may be installed on the floor. Moreover, a plurality of outdoor units 4 may be provided in the air-conditioning apparatus 3. In the case where a plurality of outdoor units 4 are provided, a plurality of refrigerant circuits 40 may be configured.

Furthermore, although not illustrated in Figs. 1 and 2, an outside air temperature sensor that detects outside air temperature Tout is provided at the outdoor unit 4, and an indoor temperature sensor that detects indoor temperature and a humidity sensor that detects indoor humidity are provided at each of the indoor units 5a and 5b. An air volume sensor (not illustrated in the drawing) that detects the volume of air may be provided at the air outlet (not illustrated in the drawing) of each of the indoor units 5a and 5b. The above-mentioned sensors are connected to the controller 2 by the transmission line 7.

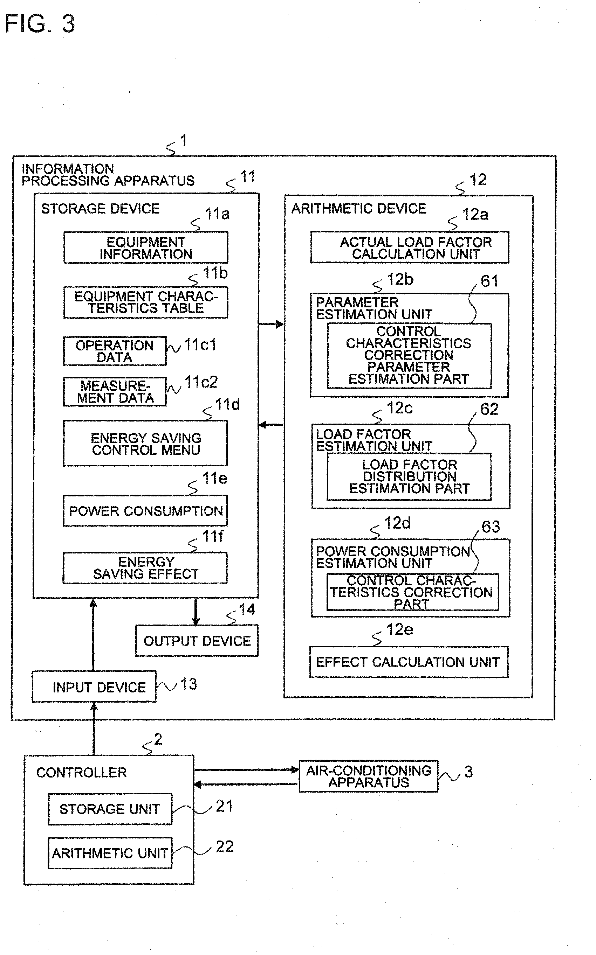

Next, the configuration of the information processing apparatus 1 illustrated in FIG. 1 will be described. FIG. 3 is a functional block diagram illustrating a configuration example of the information processing apparatus illustrated in FIG. 1. The information processing apparatus 1 includes a storage device 11 that stores various data and an arithmetic device 12 that calculates a power consumption on the basis of a parameter necessary for estimation of an energy saving effect and a load factor.

The information processing apparatus 1 also includes an input device 13 that receives various types of information necessary for estimation of an energy saving effect and receives data from the controller 2 and an output device 14 that displays a calculation result obtained by the arithmetic device 12. The configurations illustrated in FIG. 3 will next be described in detail.

Input device 13

The input device 13 is a device to be used by a user for inputting data necessary for calculation of an energy saving effect of the air-conditioning apparatus 3 to the information processing apparatus 1. The input device 13 includes, for example, a keyboard and a mouse. The input device 13 may be a touch panel. The user enters, using the input device 13, the name and address of a building for which calculation is to be performed. The user also enters, using the input device 13, a path for necessary data, a cooling operation period, a heating operation period, and working hours.

Furthermore, the user operates the input device 13 to select contents of energy saving control for which the user wants to calculate an energy saving effect from multiple options for energy saving control and select a parameter necessary for the calculation. A specific example of an image to be referred to by the user when operating the input device 13 to enter data will be described later.

A method for a user to enter information necessary for calculation of an energy saving effect is not limited to text input. For example, in the case where items are assigned in advance with different number or letter buttons on a keyboard, the user can press a number or letter button corresponding to an item that the user wants to select. Furthermore, when the user presses a specific button on the keyboard, arithmetic processing may be performed under a predetermined fixed condition. In the case where the input device 13 is a touch panel, the input device 13 may be arranged on the screen of the output device 14. To select an item displayed on the output device 14, the user can perform an operation for tapping a position on the touch panel that corresponds to an image of the displayed item.

Storage device 11

The storage device 11 is, for example, a hard disk drive. The storage device 11 stores equipment information 11a, an equipment characteristics table 11b, operation data 11c1, measurement data 11c2, and an energy saving control menu 11d that are associated with the air-conditioning apparatus 3. The storage device 11 also stores a power consumption 11e and an energy saving effect 11f that are calculated by the arithmetic device 12. Various types of information stored in the storage device 11 will next be described.

Equipment information 11a

The equipment information 11a is information serving as various conditions used for arithmetic processing performed by units included in the arithmetic device 12. The equipment information 11a includes, for example, model names of the outdoor unit 4 and the indoor units 5a and 5b, the numbers of the outdoor units 4 and the indoor units 5a and 5b, rated capacities of the outdoor unit 4 and the indoor units 5a and 5b, and rated power consumptions of the outdoor unit 4 and the indoor units 5a and 5b.

The equipment information 11a also includes model names of components included in the outdoor unit 4 and the indoor units 5a and 5b. For example, the equipment information 11a includes the model name of the compressor 31, the model name of the expansion valve 35a, and the expansion valve 35b. The equipment information 11a further includes information of the relationship of connection between the outdoor unit 4 and the indoor units 5a and 5b. Furthermore, the equipment information 11a may include information such as the type of data that the input device 13 receives from the controller 2 and the cycle of reception of the data.

Operation data 11c1 and measurement data 11c2

The operation data 11c1 is data indicating the operating state of the air-conditioning apparatus 3. The operation data 11c1 is, for example, data such as the frequency of the compressor 31 and the opening degrees of the expansion valves 35a and 35b. The operation data 11c1 may be data indicating whether a thermostat is turned on or off, the rotation speed of the heat-source-side fan 34, the rotation speed of the use-side fan 37a, and the rotation speed of the use-side fan 37b.

The measurement data 11c2 is data obtained by measurement at units of the air-conditioning apparatus 3. The measurement data 11c2 includes, for example, the temperature of refrigerant at the inlet side of the heat-source-side heat exchanger 33, the temperature of refrigerant at the outlet side of the heat-source-side heat exchanger 33, the temperature of refrigerant at the inlet side of each of the use-side heat exchangers 36a and 36b, the temperature of refrigerant at the outlet side of each of the use-side heat exchangers 36a and 36b, and the high pressure and the low pressure of the refrigeration cycle in the refrigerant circuit 40. Furthermore, the measurement data 11c2 may be data such as temperature, air volume, humidity, and a pulse value measured at the units of the air-conditioning apparatus 3. The pulse value indicates a duty ratio for the case where the compressor 31 is an inverter compressor.

Furthermore, the measurement data 11c2 may include meteorological data affecting the operation of the air-conditioning apparatus 3. The meteorological data includes, for example, outside air temperature and outside air humidity. The meteorological data may be data provided by the Meteorological Agency or a private weather forecast company or data obtained by measurement by a meteorological sensor installed near a building in which the air-conditioning apparatus 3 is installed. The meteorological data may be measured values such as standard Automated Meteorological Data Acquisition System data or may be an average value calculated from measured values. The operation data 11c1 and the measurement data 11c2 are stored in the storage device 11 in chronological order.

The above-mentioned data items of the operation data 11c1 and the measurement data 11c2 are specific examples, and data items of the operation data 11c1 and the measurement data 11c2 are not limited to those mentioned above. The operation data 11c1 and the measurement data 11c2 do not necessarily include all the data items mentioned above. Hereinafter, operation data and measurement data will be referred to as measured data, and information including equipment information and measured data will be referred to as equipment related information.

Equipment characteristics table 11b

The equipment characteristics table 11b is a table used for calculating, on the basis of the operation data 11c1 and the measurement data 11c2, a load processed by the air-conditioning apparatus 3 and a power consumption generated by the load. In the case where the operation data 11c1 includes the frequency of the compressor 31 and the measurement data 11c2 includes high pressure and low pressure of the refrigeration cycle, the equipment characteristics table 11b includes a refrigerant flow rate data table.

The refrigerant flow rate data table is a table indicating a refrigerant flow rate and including, as variables, the frequency of the compressor 31 and the high pressure and the low pressure of the refrigeration cycle. In the case where the operation data 11c1 includes the opening degrees of the expansion valves 35a and 35b, the equipment characteristics table 11b includes an expansion valve characteristics data table indicating the relationship between the opening degrees of the expansion valves 35a and 35b and a Cv value.

Furthermore, in the case where the measurement data 11c2 includes the temperature of refrigerant at the outlet of the use-side heat exchanger 36a functioning as an evaporator and the temperature of refrigerant at the inlet of the use-side heat exchanger 36a, the equipment characteristics table 11b may include an evaporator inlet specific enthalpy data table and an evaporator outlet specific enthalpy data table.

The evaporator inlet specific enthalpy data table is a table indicating a specific enthalpy including, as a variable, the temperature of refrigerant at the inlet side of the use-side heat exchanger 36a functioning as an evaporator. The evaporator outlet specific enthalpy data table is a table indicating a specific enthalpy including, as a variable, the temperature of refrigerant at the outlet side of the use-side heat exchanger 36a functioning as an evaporator.

A heat exchanger for which the tables mentioned above are provided is not limited to the use-side heat exchanger 36a and may be the use-side heat exchanger 36b or the heat-source-side heat exchanger 33. Furthermore, the equipment characteristics table 11b may include a specific enthalpy data table for such a heat exchanger functioning as a condenser as well as for such a heat exchanger functioning as an evaporator. For example, the equipment characteristics table 11b may include a condenser inlet specific enthalpy data table and a condenser outlet specific enthalpy data table for a heat-source-side heat exchanger functioning as a condenser.

The specific enthalpy data tables, the refrigerant flow rate data tables, and the expansion valve characteristics data tables mentioned above are used for calculation of processing loads of the indoor units 5a and 5b. The details of the method for calculating a processing load on the basis of the data tables will be described with reference to a configuration of an actual load factor calculation unit 12a.

Furthermore, the equipment characteristics table 11b includes a compressor power data table and a heat-source-side fan power data table. The compressor power data table is a table indicating the power consumption of the compressor and including, as variables, the frequency of the compressor 31 and the high pressure and the low pressure of the refrigeration cycle.

The heat-source-side fan power data table is a table indicating the power consumption of the heat-source-side fan and including, as a variable, a load factor of the outdoor unit 4. The power consumption of the outdoor unit 4 is calculated on the basis of these power data tables. The details of the method for calculating the power consumption on the basis of the power data tables will be described with reference to a configuration of a power consumption estimation unit 12d.

Energy saving control menu 11d

The energy saving control menu 11d is a menu including the list of one or more contents of energy saving control for which the information processing apparatus 1 estimates an energy saving effect. Furthermore, the energy saving control menu includes a parameter necessary for each content of the menu. For example, for energy saving control for changing set temperature, parameters such as a changed set temperature and an operating time for the case where the change is made.

Power consumption 11e

The power consumption 11e is the power consumption of the air-conditioning apparatus 3 calculated by the arithmetic device 12. The power consumption is the total value for the whole target period during which calculation is performed. A yearly power consumption, a power consumption for a cooling operation period, and a power consumption for a heating operation period may be stored individually. Furthermore, the power consumption includes a power consumption for the case where energy saving control selected by the user using the input device 13 is performed and a power consumption for the case where the selected energy saving control is not performed.

Energy saving effect 11f

The energy saving effect 11f is a power consumption reduction effect resulting from execution of energy saving control selected by the user using the input device 13. The energy saving effect 11f will be described specifically, where the power consumption for the case where energy saving control selected by the user is performed is represented by PWa and the power consumption for the case where the selected energy saving control is not performed is represented by PW0.

The energy saving effect 11f is represented by the ratio of a decrease in the power consumption PWa to the power consumption PW0, that is, (PW0-PWa)/PW0. As with power consumption, a yearly energy saving effect, an energy saving effect for a cooling operation period, and an energy saving effect for a heating operation period may be stored individually.

Arithmetic device 12

As illustrated in FIG. 1, the arithmetic device 12 includes a memory 41 that stores a program and a central processing unit (CPU) 42 that performs a process in accordance with the program. The memory 41 is, for example, a nonvolatile memory including an electrically erasable and programmable read only memory (EEPROM) and a flash memory.

As illustrated in FIG. 3, the arithmetic device 12 includes the actual load factor calculation unit 12a, a parameter estimation unit 12b, a load factor estimation unit 12c, the power consumption estimation unit 12d, and an effect calculation unit 12e. The parameter estimation unit 12b includes a control characteristics correction parameter estimation part 61. The load factor estimation unit 12c includes a load factor distribution estimation part 62. The power consumption estimation unit 12d includes a control characteristics correction part 63. When the CPU 42 executes the program stored in the memory 41, the actual load factor calculation unit 12a, the parameter estimation unit 12b, the load factor estimation unit 12c, the power consumption estimation unit 12d, and the effect calculation unit 12e are configured in the information processing apparatus 1.

Actual load factor calculation unit 12a

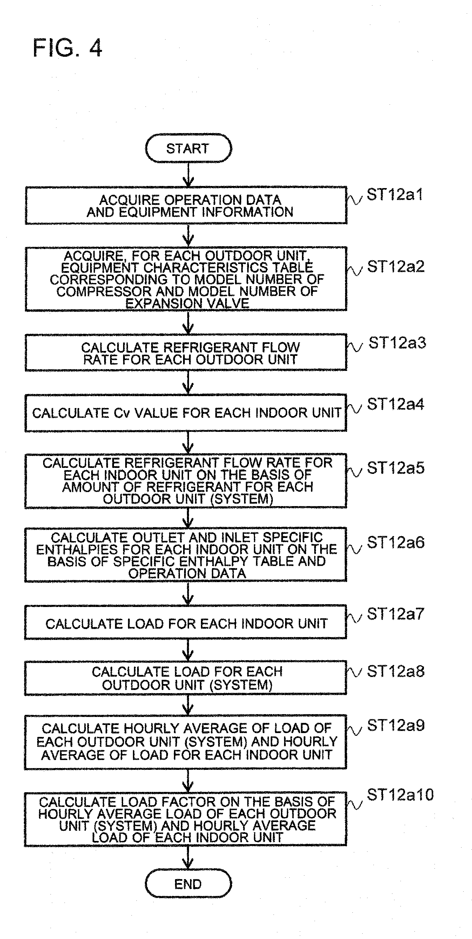

The actual load factor calculation unit 12a will be described. FIG. 4 is a flowchart of a procedure of an operation of the actual load factor calculation unit illustrated in FIG. 3. First, the actual load factor calculation unit 12a acquires operation data, measurement data, and equipment information from the storage device 11 (step ST12a1). The actual load factor calculation unit 12a acquires, for each outdoor unit, an equipment characteristics table corresponding to the model number of a compressor and the model number of an expansion valve from the storage device 11 (step ST12a2).

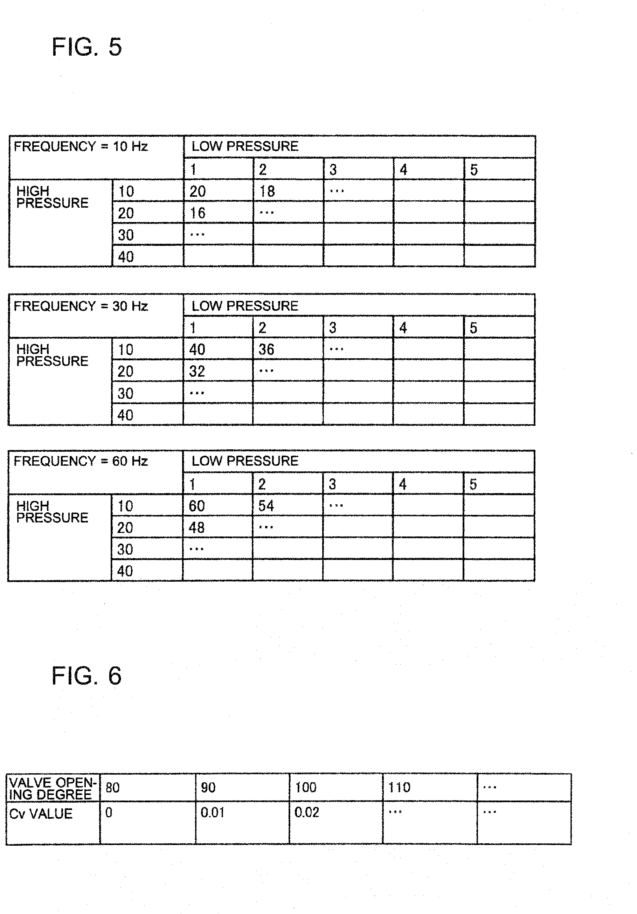

FIG. 5 is a diagram illustrating an example of a refrigerant flow rate data table. As illustrated in FIG. 5, the refrigerant flow rate data is a table indicating refrigerant flow rates for three variables, the frequency of the compressor, the high pressure, and the low pressure. A refrigerant flow rate data table is created for each model name of compressor. FIG. 5 illustrates, for example, a refrigerant flow rate data table for the case where the model name of a compressor is COM-A. FIG. 5 illustrates a table describing refrigerant flow rates corresponding to combinations of high pressure and low pressure for individual frequencies of the compressor and indicating relationships among multiple high pressures, multiple low pressures, and amounts of refrigerant.

FIG. 6 is a diagram illustrating an example of an expansion valve characteristics data table. As illustrated in FIG. 6, the expansion valve characteristics data table is a table indicating the relationship between the expansion valve opening degree of the expansion valve and a Cv value. An expansion valve characteristics data table is held for each model name of expansion valve. FIG. 6 illustrates, for example, an expansion valve characteristics data table for the case where the model name of an expansion valve is LEV-A.

In the case where a plurality of refrigerant circuits 40 are configured, a refrigerant flow rate is calculated for each of the refrigerant circuits 40. In this example, a case where a plurality of outdoor units are provided and the amount of refrigerant is calculated for each of the outdoor units will be described. However, the amount of refrigerant may be calculated for each compressor. The actual load factor calculation unit 12a calculates a refrigerant flow rate for each outdoor unit (step ST12a3).

For calculation of the refrigerant flow rate, the actual load factor calculation unit 12a uses the refrigerant flow rate data table. The actual load factor calculation unit 12a calculates the refrigerant flow rate corresponding to three variables, the frequency of the compressor in the operation data, the high pressure, and the low pressure, on the basis of the refrigerant flow rate data table. For a combination equipment type in which a plurality of outdoor units 4 are combined to configure a single refrigerant circuit 40, after calculating refrigerant low rates for all the outdoor units 4 belonging to the same system, the actual load factor calculation unit 12a adds all the calculated refrigerant flow rates together to obtain the refrigerant flow rate of the system.

Next, the actual load factor calculation unit 12a calculates a refrigerant flow rate for each indoor unit (step ST12a4). The actual load factor calculation unit 12a calculates a Cv value on the basis of the opening degree of an expansion valve in each of the indoor units belonging to the same system and the expansion valve characteristics data table. The actual load factor calculation unit 12a calculates the refrigerant flow rate for each of the indoor units on the basis of the Cv value of the indoor unit (step ST12a5).

The actual load factor calculation unit 12a divides the refrigerant flow rate of the system calculated in step ST12a3 proportionally to the indoor units, using equation (1), in accordance with the ratio of the Cv value of each indoor unit to the total sum of the Cv values for all the indoor units belonging to the same system.

Refrigerant flow rate of target indoor unit = refrigerant flow rate of system × (Cv value of target indoor unit/sum of Cv values of indoor units belonging to the same system)   (1).

Next, the actual load factor calculation unit 12a calculates outlet and inlet specific enthalpies for each indoor unit on the basis of the specific enthalpy table and the operation data (step ST12a6). For a cooling operation, the actual load factor calculation unit 12a calculates the evaporator inlet specific enthalpy on the basis of the liquid refrigerant temperature at the refrigerant outlet of the heat-source-side heat exchanger 33 and the evaporator inlet specific enthalpy data table.

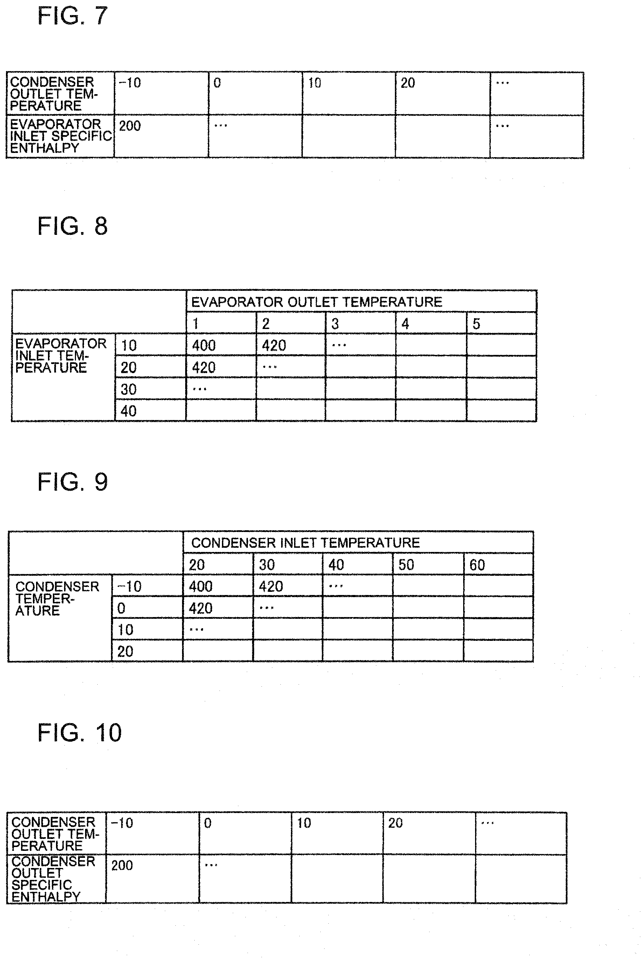

FIG. 7 is a diagram illustrating an example of the evaporator inlet specific enthalpy data table. FIG. 8 is a diagram illustrating an example of the evaporator outlet specific enthalpy data table. The actual load factor calculation unit 12a also calculates the evaporator outlet specific enthalpy on the basis of two variables, the liquid refrigerant temperature and the gas refrigerant temperature of each indoor unit, and the evaporator outlet specific enthalpy data table.

For a heating operation, the actual load factor calculation unit 12a calculates the condenser inlet specific enthalpy by linear interpolation, on the basis of two variables, condensing temperature and gas refrigerant temperature of each indoor unit, and the condenser inlet specific enthalpy data table. The actual load factor calculation unit 12a calculates the condenser outlet refrigerant specific enthalpy on the basis of the liquid refrigerant temperature of each indoor unit and the condenser outlet specific enthalpy data table. FIG. 9 is a diagram illustrating an example of the condenser inlet specific enthalpy data table. FIG. 10 is a diagram illustrating an example of the condenser outlet specific enthalpy data table.

For a cooling operation, the actual load factor calculation unit 12a calculates a load for each indoor unit on the basis of the evaporator outlet and inlet specific enthalpies and using equation (2) (step ST12a7). For a heating operation, the actual load factor calculation unit 12a calculates a load for each indoor unit on the basis of the condenser outlet and inlet specific enthalpies and using equation (2) (step ST12a7).

Load of indoor unit [kW] = refrigerant flow rate of indoor unit [kg/h] / 3600 × difference between output and input specific enthalpies [kJ/kg]   (2)

The actual load factor calculation unit 12a adds the loads of the indoor units belonging to the same system to obtain the load of the system (step ST12a8). The actual load factor calculation unit 12a divides the load of the system by the rated capacity of the system to obtain a load factor (step ST12a9). At this time, in the case of a cooling operation, the actual load factor calculation unit 12a divides the load of the system by the cooling capacity. In the case of a heating operation, the actual load factor calculation unit 12a divides the load of the system by the heating capacity. The actual load factor calculation unit 12a calculates an hourly average of the calculated load of each unit and an hourly average of the calculated load of the system (step ST12a10). Regarding an hourly average, the average of data during the period from 0:00 to 0:59 is defined as an average load for the 0 a.m. hour.

Parameter estimation unit 12b

In the case where efficiency of the equipment and an air-conditioning load to be processed are varied by the execution of energy saving control, a parameter obtained by the parameter estimation unit 12b is a parameter necessary for estimating the degrees of such variations. An example of evaporating temperature during a cooling operation will be described.

It is theoretically clear that a heat pump air-conditioning apparatus achieves a higher efficiency at a higher evaporating temperature during a cooling operation. Thus, examples of an energy saving control menu include evaporating temperature control during a cooling operation. However, an excessive increase in the evaporating temperature degrades the processing capacity, and cooling may thus be failed. Therefore, control such as adjusting an increase in the evaporating temperature in accordance with the size of the air conditioning load is performed. There may be various methods for control.

For estimation of an energy saving effect, an increase in the evaporating temperature needs to be properly estimated. Thus, the parameter estimation unit 12b includes the control characteristics correction parameter estimation part 61 that obtains a control characteristics correction parameter for estimating an increase in the evaporating temperature in accordance with the environment of target equipment. For example, the evaporating temperature for evaporating temperature control is calculated using equation (3).

$$ET = ET0 + (\alpha \times Qcy + \beta) \qquad \ldots (3).$$

In Equation (3), ET represents evaporating temperature when evaporating temperature control is performed, ET0 represents evaporating temperature when evaporating temperature control is not performed, Qcy represents an estimated load of the system, and $\alpha$ and $\beta$ represent control characteristics correction parameters. As described above, the control characteristics correction parameter estimation part 61 obtains, as parameters to be used for evaporating temperature control, control characteristics correction parameters in accordance with control characteristics of the equipment.

In this example, evaporating temperature varies according to the estimated load of the system. However, the equation for calculating evaporating temperature is merely an example, and another explanatory variable, such as a load for each indoor unit, may be used. A method for calculating a control characteristics correction parameter may be determined according to the characteristics of target equipment and control specifications or may be derived from the acquired operation data.

Furthermore, although the evaporating temperature control has been described above as an example, a control characteristics correction parameter may be used not only for estimation of evaporating temperature but also for estimation of, for example, the frequency of the compressor or condensing temperature.

Load factor estimation unit 12c

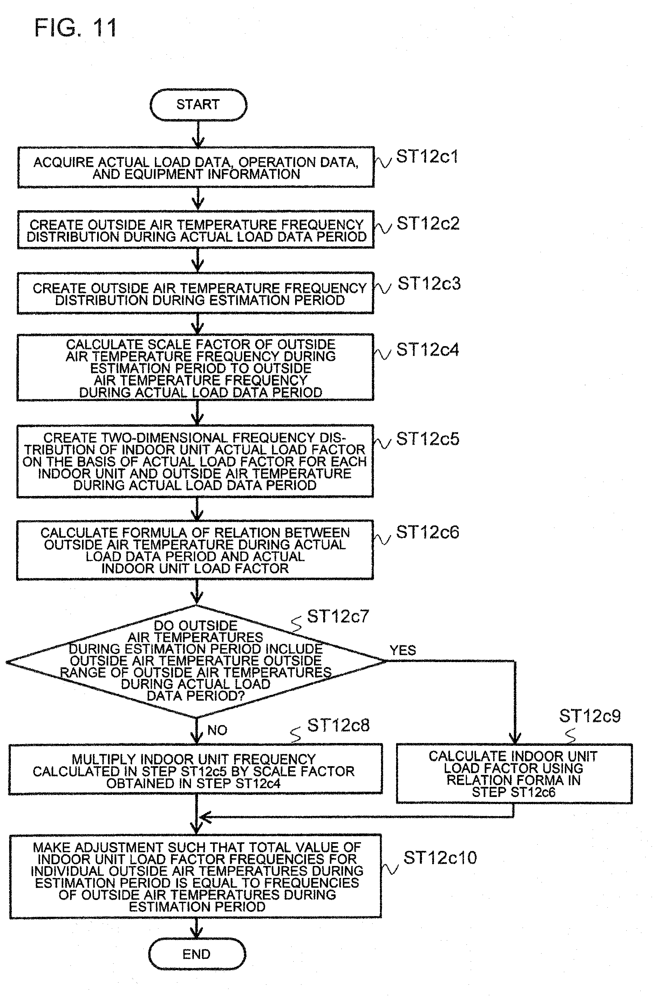

The load factor estimation unit 12c will be described. FIG. 11 is a flowchart of a procedure of an operation of the load factor estimation unit illustrated in FIG. 3.

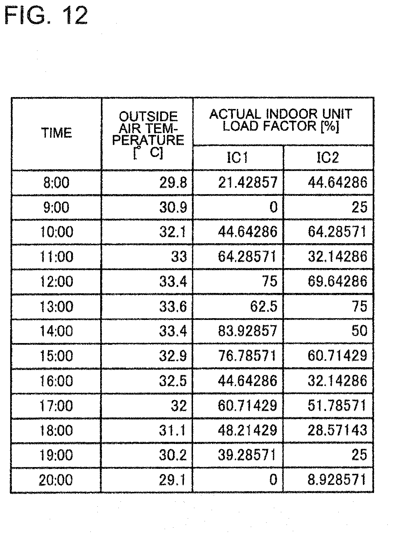

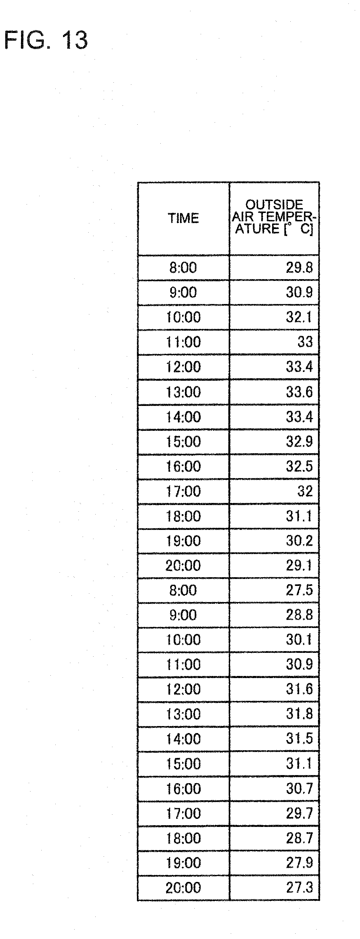

First, the load factor estimation unit 12c collects data necessary for estimation of a load factor (step ST12c1). The necessary data include outside air temperature data during a period for which a user wants to perform estimation, an actual load factor for each indoor unit calculated by the actual load factor calculation unit, and outside air temperature data during an actual load data period in which the load factor is generated. FIG. 12 is a diagram illustrating an example of outside air temperature and actual indoor unit load factors during the actual load data period. FIG. 13 is a diagram illustrating an example of outside air temperature data indicating chronological changes of outside air temperature.

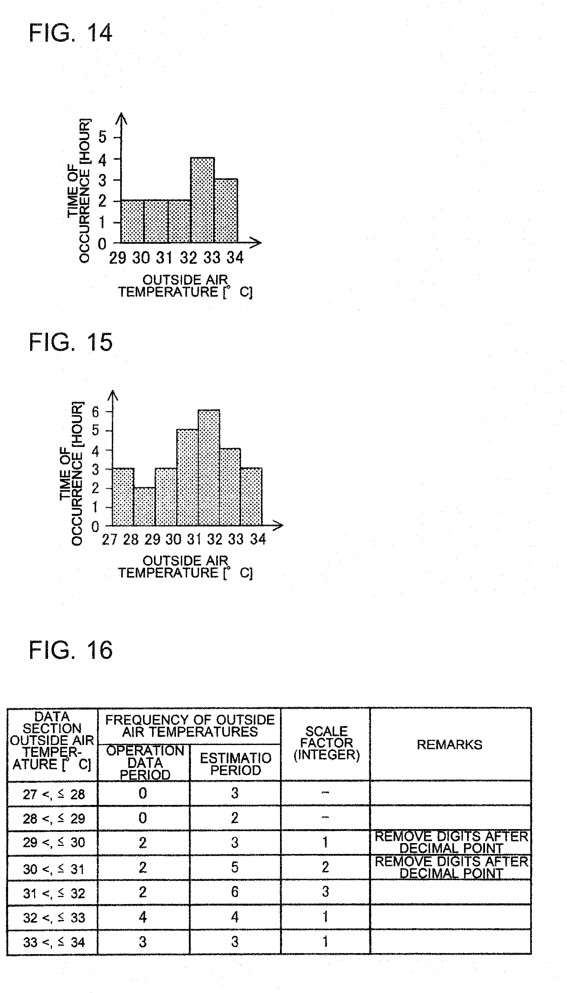

The load factor estimation unit 12c creates an "outside air temperature frequency distribution during an actual load data period" in which the outside air temperature data during the actual load data period are divided into sections in units of degrees Celsius (°C) and the number of data items falling within each of the sections is obtained (step ST12c2). FIG. 14 is a graph of an example of the distribution of frequencies of outside air temperatures during the actual load data period.

The load factor estimation unit 12c creates an "outside air temperature frequency distribution during an estimation period" in which the outside air temperature data during the estimation period are divided into sections in units of degrees Celsius (°C) and the number of data items falling within each of the sections is obtained (step ST12c3). FIG. 15 is a graph of an example of the distribution of frequencies of outside air temperatures during the estimation period.

The load factor estimation unit 12c calculates, for each outside air temperature, a scale factor of the "outside air temperature frequency during the estimation period" created in step ST12c3 to the "outside air temperature frequency during the actual load data period" created in step ST12c2 (step ST12c4). In this example, scale factors are set to integers by removing the digits after the decimal point. For example, in the case where the number that multiplies is 2.5, the load factor estimation unit 12c obtains 2 as a calculation result. FIG. 16 is a diagram illustrating an example of a scale factor for frequencies of outside air temperatures.

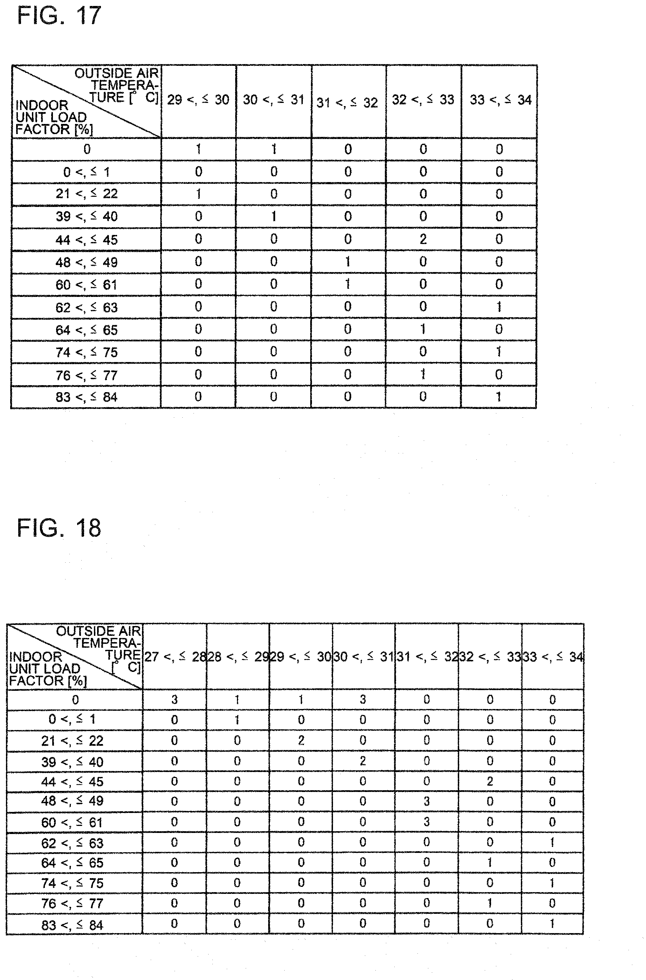

Next, the load factor estimation unit 12c creates, for each indoor unit, an "actual two-dimensional frequency distribution" indicating outside air temperatures in units of degrees Celsius (°C) and load factors in units of percentages on axes thereof, on the basis of the "outside air temperature frequency distribution" created in step ST12c2 and the actual indoor unit load factor (step ST12c5). FIG. 17 is a diagram illustrating an example of the distribution of actual two-dimensional frequencies. The load factor estimation unit 12c calculates a relation formula of a regression line, $y = ax + b$, where the outside air temperature data during the actual load data period is represented by (x) and the actual indoor unit load factor is represented by an object variable (y) (step ST12c6).

The load factor distribution estimation part 62 determines whether or not the outside air temperature data during the estimation period includes an outside air temperature outside the range of the outside air temperature data during the actual load data period (step ST12c7). In the case where the outside air temperatures of the outside air temperature data during the estimation period fall within the range of the outside air temperature data during the actual load data period, the load factor distribution estimation part 62 multiplies the "actual indoor unit load factor frequency" for each outside air temperature obtained in step ST12c5 by the scale factor for each outside air temperature obtained in step ST12c4 (step ST12c8).

In FIG. 16, for example, the frequency scale factor for "31 °C < Tout ≤ 32 °C" is 3, where the outside air temperature is represented by Tout. Thus, the load factor distribution estimation part 62 multiplies the frequencies for "48 % < LR ≤ 49 %" and "60 % < LR ≤ 61 %" in FIG. 17 by 3, where the actual indoor unit load factor is represented by LR.

In the case where it is determined in step S12c7 that the outside air temperature data during the estimation period includes an outside air temperature outside the range of the outside air temperature data during the actual load data period, the load factor distribution estimation part 62 calculates an estimated indoor unit load factor at a target outside air temperature in accordance with an approximation equation calculated based on the inclination of the relation formula created in ST12c6 (step ST12c9).

For example, with reference to FIG. 12, a temperature range from 27 °C to 29 °C is not described as outside air temperature during the actual load data period. Thus, the load factor distribution estimation part 62 calculates an estimated indoor unit load factor for the range from 27 °C to 29 °C in accordance with the formula (y = ax + b) of relation between an outside air temperature and an indoor unit load factor.

The load factor distribution estimation part 62 confirms whether the total value of estimated frequencies of indoor unit load factors for individual outside air temperatures are equal to the total value of frequencies of outside air temperatures during the estimation period created in step ST12c3. In the case where these total values are not the same, it is considered that a unit cut off in the processing of step ST12c4 is insufficient. Thus, the load factor distribution estimation part 62 randomly sets a load factor for meeting the insufficiency and randomly allocating a frequency until the insufficiency is resolved (step ST12c10).

For example, with reference to FIG. 16, in the outside air temperature range "29 °C < Tout ≤ 30 °C", the digits after the decimal point of the scale factor are removed. Thus, compared to the total value 3 of the outside air temperature frequencies during the estimation period, the value obtained by multiplying the "actual indoor unit load factor frequency" by the scale factor 1 for "29 °C < Tout ≤ 30 °C is 2 in FIG 17, and the range for which the scale factor is set is small.

In this case, the load factor distribution estimation part 62 randomly selects "0 %" or "21 % < LR ≤ 22 %" for the actual indoor unit load factor LR for the range "29 °C < Tout ≤ 30 °C", and allocates a frequency of 1, which corresponds to the insufficiency. FIG 18 is a diagram illustrating an example of an estimated indoor unit load factor frequency distribution obtained by the load factor distribution estimation part illustrated in FIG. 3. Hereinafter, data obtained by the load factor estimation unit 12c will be referred to as estimated load data.

Power consumption estimation unit 12d

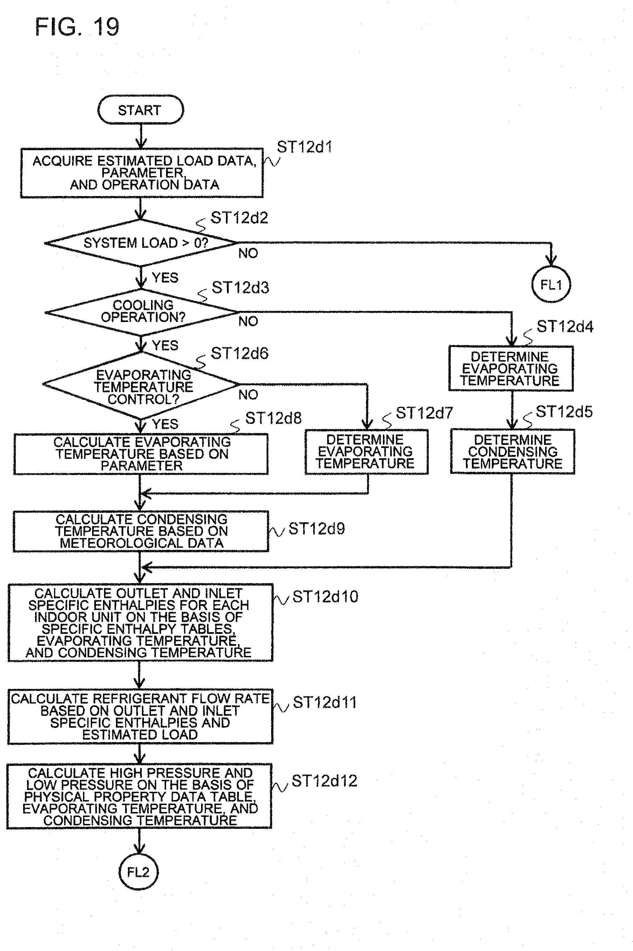

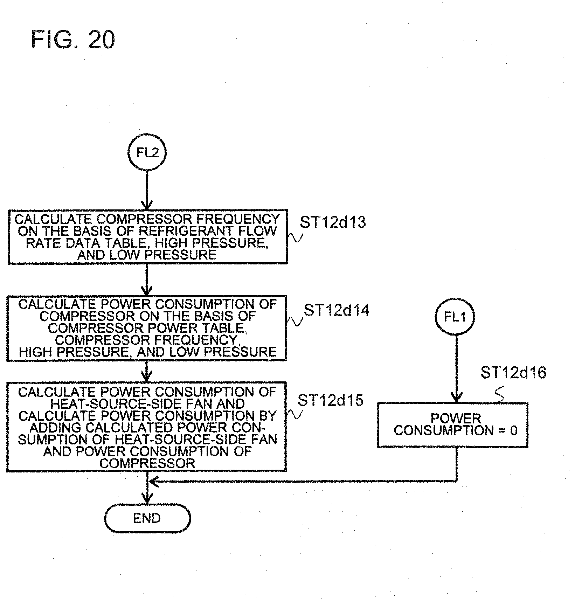

The power consumption estimation unit 12d will be described. Figs. 19 and 20 are flowcharts of a procedure of an operation of the power consumption estimation unit illustrated in FIG. 3. First, the power consumption estimation unit 12d collects data necessary for calculation of a power consumption (step ST12d1). Data to be collected include estimated load data obtained by the load factor estimation unit 12c, a parameter obtained by the parameter estimation unit 12b, and operation data acquired from the controller 2.

The power consumption estimation unit 12d determines whether or not the load of the system to be estimated is larger than 0 (step ST12d2). In the case where the load of the system is 0, the power consumption estimation unit 12d determines that the power consumption is 0 (step ST12d16 in FIG. 20), and ends the procedure.

In contrast, in the case where it is determined in step St12d2 that the estimated load is larger than 0, the power consumption estimation unit 12d determines whether the operation mode is a heating operation mode or a cooling operation mode (step ST12d3). In the case where a heating operation is being performed, the power consumption estimation unit 12d calculates evaporating temperature on the basis of control specifications (step ST12d4). Then, the power consumption estimation unit 12d determines condensing temperature (step ST12d5). The condensing temperature may be a fixed value based on control specifications or a value that can vary depending on conditions.

In the case where it is determined in step ST12d3 that a cooling operation is being performed, the power consumption estimation unit 12d determines whether or not evaporating temperature control is to be performed (step ST12d6). In the case where the evaporating temperature control is not selected in the cooling operation, the power consumption estimation unit 12d determines evaporating temperature (step ST12d7). The evaporating temperature may be a fixed value based on control specifications or a value that can vary depending on conditions.

In contrast, in the case where the evaporating temperature control is selected in the cooling operation, the power consumption estimation unit 12d determines evaporating temperature on the basis of the parameter obtained by the parameter estimation unit 12b (step ST12d8). Specifically, the power consumption estimation unit 12d calculates the evaporating temperature for the evaporating temperature control in accordance with the equation (3).

Next, the power consumption estimation unit 12d calculates condensing temperature for the cooling operation on the basis of meteorological data (step ST12d9). The power consumption estimation unit 12d calculates outlet and inlet specific enthalpies for an indoor unit on the basis of the calculated evaporating temperature, the calculated condensing temperature, and specific enthalpy data tables (step ST12d10). A method for calculating specific enthalpies is different between the cooling operation mode and the heating operation mode.

For the cooling operation, the power consumption estimation unit 12d refers to the evaporator outlet specific enthalpy data table, and obtains the evaporator outlet specific enthalpy by linear interpolation by making the evaporator inlet temperature equal to the evaporating temperature and making the evaporator outlet temperature equal to the evaporating temperature plus β degrees Celsius. Furthermore, the power consumption estimation unit 12d refers to the evaporator inlet specific enthalpy data table and obtains the evaporator inlet specific enthalpy by linear interpolation by making the condenser outlet temperature equal to the condensing temperature minus $\gamma$ degrees Celsius.

For the heating operation, the power consumption estimation unit 12d refers to the condenser inlet specific enthalpy data table and obtains the condenser inlet specific enthalpy by linear interpolation by making the condenser inlet temperature equal to the condensing temperature plus $\delta$ degrees Celsius. Furthermore, the power consumption estimation unit 12d refers to the condenser outlet specific enthalpy data table and obtains the condenser outlet specific enthalpy by linear interpolation by making the condenser outlet temperature equal to the condensing temperature minus $\eta$ degrees Celsius.

For the cooling operation, the power consumption estimation unit 12d calculates the flow rate of refrigerant of the target system on the basis of the evaporator outlet and inlet specific enthalpies and the load of the system to be estimated (step ST12d11). For the heating operation, the power consumption estimation unit 12d calculates the flow rate of refrigerant of the target system on the basis of the condenser outlet and inlet specific enthalpies and the load of the system to be estimated (step ST12d11).

The power consumption estimation unit 12d calculates high pressure and low pressure on the basis of a physical property data table indicating the relationship between saturation pressure and temperature, the evaporating temperature, and the condensing temperature (step ST12d12). The physical property data table may be stored in the storage device 11 or may be input from the outside using the input device 13. The low pressure is represented by saturation pressure Pe at the time when the temperature calculated using the physical property data table is equal to the evaporating temperature. The high pressure is represented by saturation pressure Pd at the time when the temperature calculated using the physical property data table is equal to the condensing temperature.

The power consumption estimation unit 12d calculates, on the basis of a refrigerant flow rate data table, the high pressure, and the low pressure, compressor frequency serving as the refrigerant flow rate obtained in step ST12d11 (step ST12d13). For a combination equipment type, regarding the compressor frequency corresponding to the system for which estimation is to be performed, the power consumption estimation unit 12d distributes loads equally to a plurality of compressors.

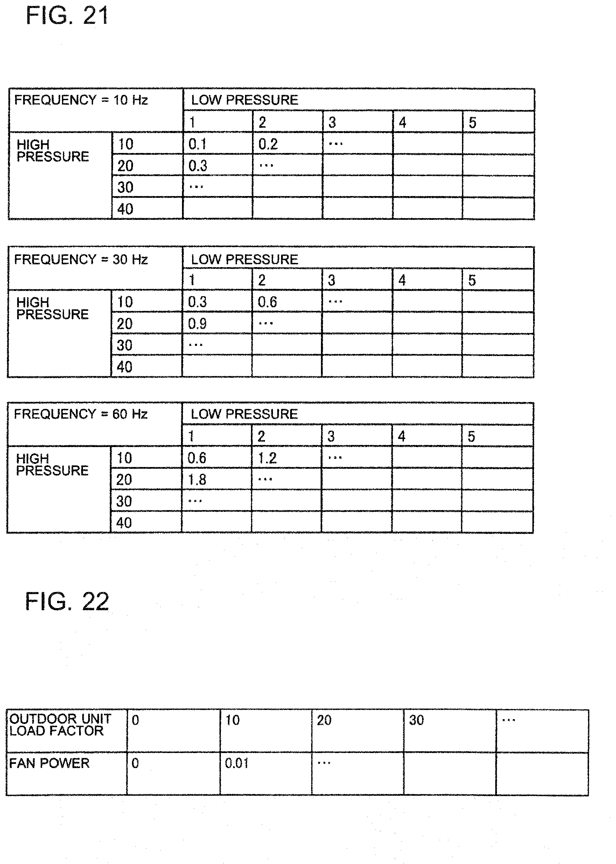

Then, the power consumption estimation unit 12d calculates a power consumption of each compressor, on the basis of a compressor power data table and the frequency, the high pressure, and the low pressure that are calculated for the compressor in calculations up to step ST12d13 (step ST12d14). FIG. 21 is a diagram illustrating an example of a compressor power data table stored in the storage device illustrated in FIG. 3. The compressor power data table is created for each model name of compressor. The power consumption estimation unit 12d may consider inverter loss in a calculated power consumption.

Then, the power consumption estimation unit 12d calculates the power consumption of the heat-source-side fan 34 with reference to a heat-source-side fan power data table. The power consumption estimation unit 12d calculates the power consumption of the system for which estimation is to be performed, by adding the power consumption of the heat-source-side fan and the power consumption of the compressor (step ST12d15). FIG. 22 is a diagram illustrating an example of a heat-source-side fan power data table stored in the storage device illustrated in FIG. 3.

The processing procedure of the power consumption estimation unit 12d for the case where control for which calculation is performed is evaporating temperature control has been described above with reference to Figs. 19 and 20. However, control for which calculation is performed is not necessarily evaporating temperature control. Control for which calculation is to be performed may be switched between compressor frequency control, condensing temperature control, and control of other parameters depending on the characteristics of the control, so that power consumption can be calculated.

Effect calculation unit 12e

The effect calculation unit 12e compares the power consumption calculated by the power consumption estimation unit 12d for the case where energy saving control is performed with the power consumption calculated by the power consumption estimation unit 12d for the case where energy saving control is not performed, and calculates an energy saving effect. A yearly energy saving effect, an energy saving effect for a cooling operation period, and an energy saving effect for a heating operation period may be calculated in a separate manner.

Output device 14

The output device 14 is, for example, a display device such as a liquid crystal display. The output device 14 outputs an image to be referred to by a user for inputting data using the input device 13. The output device 14 also outputs an energy saving effect calculated by the effect calculation unit 12e.

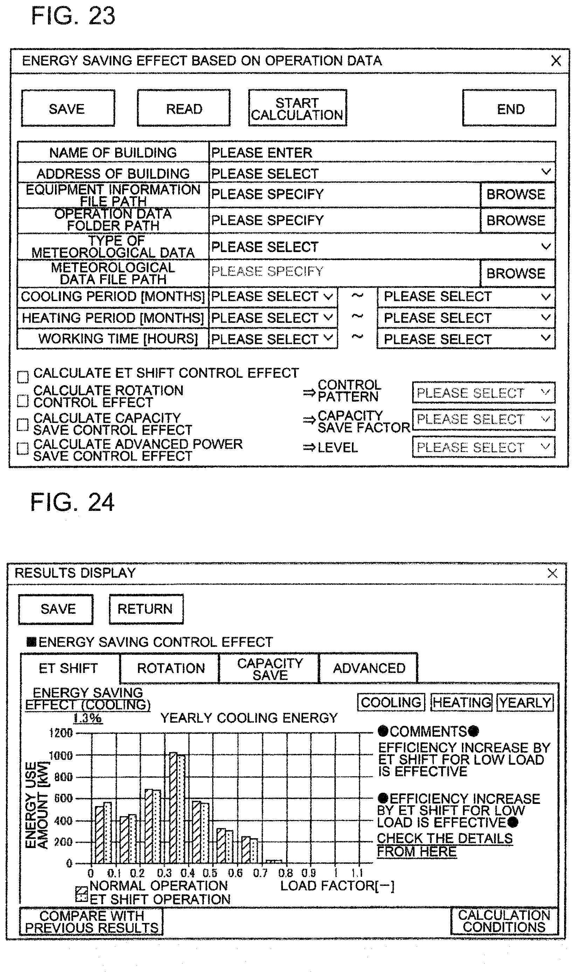

FIG. 23 is a diagram illustrating an example of an image displayed on the output device when the user enters data using the input device illustrated in FIG 3. The user enters the name and address of a building for which calculation is to be performed, a path for necessary data, a cooling operation period, a heating operation period, and a working hours while referring to the image displayed on the output device 14. The user also selects control under which an energy saving effect is calculated and selects a necessary parameter while referring to the image displayed on the output device 14.

FIG. 24 is a diagram illustrating an example of an image indicating an energy saving effect displayed on the output device illustrated in FIG. 3. Regarding the energy saving control selected by the user using the input device 13, the output device 14 displays a yearly energy saving effect, an energy saving effect for a cooling operation period, and an energy saving effect for a heating operation period.

The user is able to select a desired period and energy saving control that the user wants to display, by performing an operation for selecting a tab or a button displayed on the image. The output device 14 may display not only an energy saving effect for a target period but also an energy consumption for each load factor. Depending on control, an energy saving effect may vary according to a load factor band. Thus, the user is able to check a load factor with a high effect and a load factor with a low effect.

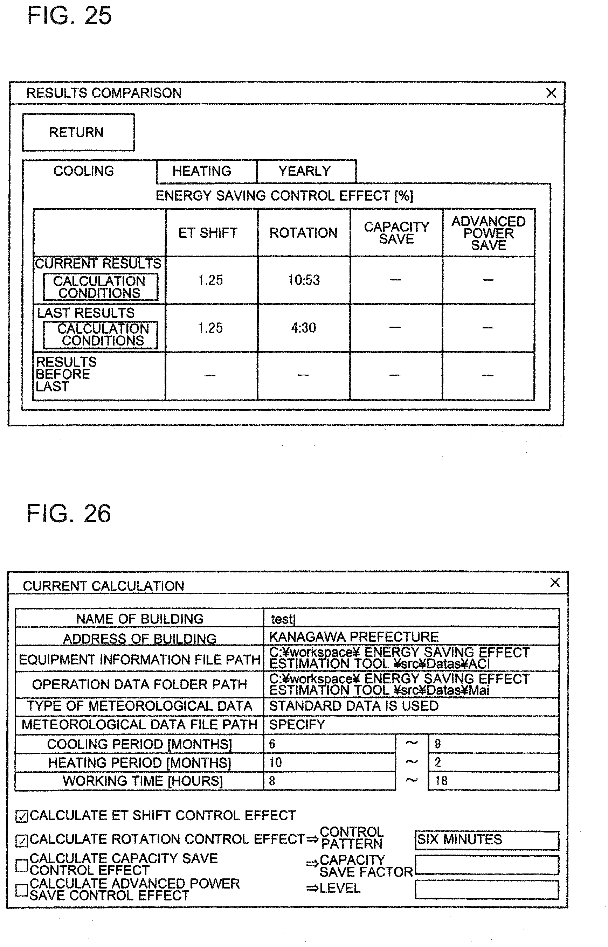

FIG. 25 is a diagram illustrating an example of an image for comparing energy saving effects in a chronological manner. As illustrated in FIG 25, the output device 14 may output not only the current calculation results as the latest calculation results but also an image for comparing the current calculation results with the last calculation results and the results before the last results.

The output device 14 displays an energy saving effect for a cooling operation period, an energy saving effect for a heating operation period, and a yearly energy saving effect in accordance with energy saving control. FIG. 26 is a diagram illustrating an example of an image indicating calculation conditions. The output device 14 may display calculation conditions in the separate image illustrated in FIG. 26 as well as the energy saving effects illustrated in FIG. 25.

The information processing apparatus 1 according to Embodiment 1 includes the storage device 11, the arithmetic device 12, the input device 13 that receives contents and a condition of energy saving control for which calculation is to be performed and acquires operation data and measurement data of equipment from the controller 2 of the equipment, and the output device 14 that outputs the calculated energy saving effect. The storage device 11 stores equipment information, an equipment characteristics table, and an energy saving control menu.

The arithmetic device 12 calculates an energy saving effect of the equipment in accordance with the contents and the condition of the energy saving control. The arithmetic device 12 includes the actual load factor calculation unit 12a, the parameter estimation unit 12b, the load factor estimation unit 12c, the power consumption estimation unit 12d, and the effect calculation unit 12e. The actual load factor calculation unit 12a calculates an actual load factor based on the operation data and the measurement data.

The parameter estimation unit 12b includes the control characteristics correction parameter estimation part 61 that obtains a control characteristics correction parameter associated with control characteristics of the equipment. The load factor estimation unit 12c includes the load factor distribution estimation part 62 that estimates the distribution of load factors during an estimation target period for an energy saving effect on the basis of an actual load factor.

The power consumption estimation unit 12d includes the control characteristics correction part 63 that corrects the control characteristics on the basis of the control characteristics correction parameter and calculates, on the basis of the distribution of load factors and the corrected control characteristics, a power consumption of the equipment for the case where the energy saving control is performed and a power consumption of the equipment for the case where the energy saving control is not performed. The effect calculation unit 12e calculates an energy saving effect on the basis of a result of the calculation by the power consumption estimation unit 12d.

The information processing apparatus 1 according to Embodiment 1 estimates the load factor distribution during the estimation target period on the basis of the actual load factor based on the operation data and the measurement data of the equipment, and corrects the control characteristics of the equipment in accordance with control on the basis of the control characteristics correction parameter. Thus, a load factor can be estimated by taking into consideration variations in the load that varies independently of outside air temperature, and equipment characteristics that vary according to control are reflected in calculation of a power consumption. As a result, the accuracy of estimation of a power consumption and an energy saving effect can be increased.

Embodiment 2

According to Embodiment 2, in the case where operation data and measurement data of equipment for which calculation is to be performed are not acquired, a power consumption and an energy saving effect are estimated in accordance with an external program. In Embodiment 2, the same components as those described above in Embodiment 1 are denoted by the same signs as those denoting the same components in Embodiment 1, and detailed description of the components will be omitted.

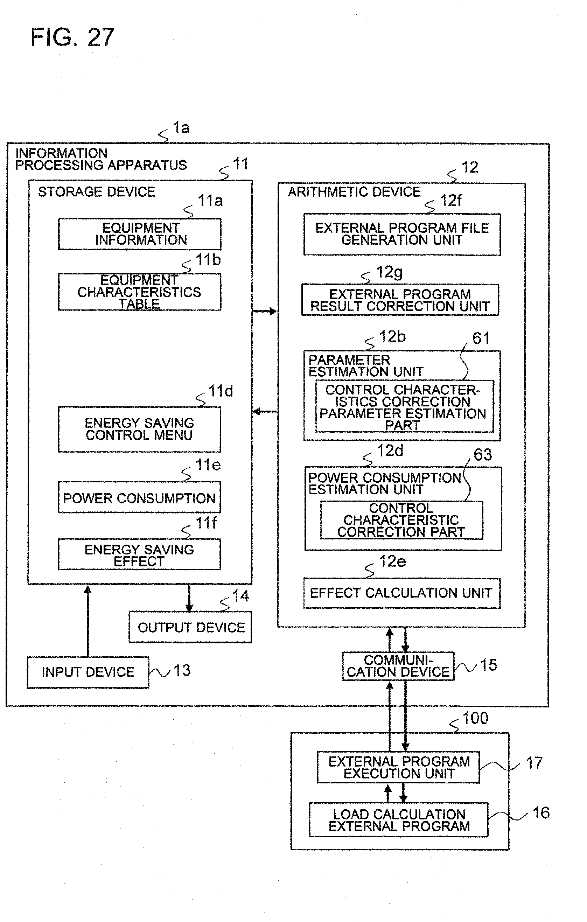

The configuration of the information processing apparatus 1 according to Embodiment 2 will be described. FIG 27 is a functional block diagram illustrating a configuration example of the information processing apparatus according to Embodiment 2.

Compared to the configuration illustrated in FIG. 3, an information processing apparatus 1a according to Embodiment 2 includes a communication device 15 that communicates with a load calculation external program 16 to be executed by another information processing apparatus 100. Although not illustrated in the drawing, estimated load data calculated by execution of the load calculation external program 16 is stored in the storage device 11.

The arithmetic device 12 in the information processing apparatus 1a includes, in place of the actual load factor calculation unit 12a and the load factor estimation unit 12c illustrated in FIG. 3, an external program file generation unit 12f and an external program result correction unit 12g. In Embodiment 2, a case where the input device 13 is a touch panel will be described. The input device 13 is placed on the screen of the output device 14.

The information processing apparatus 100 is, for example, a server. The information processing apparatus 100 includes a storage device (not illustrated in the drawing) that stores the load calculation external program 16 and a CPU (not illustrated in the drawing) including an external program execution unit 17 that executes the load calculation external program.

The external program execution unit 17 executes the load calculation external program 16 using data such as conditions received from the arithmetic device 12 of the information processing apparatus 1a through the communication device 15, and sends execution results to the arithmetic device 12 through the communication device 15.

Communication device 15

The communication device 15 communicates with the load calculation external program 16 executed by the information processing apparatus 100. For example, the communication device 15 passes a file generated by the external program file generation unit 12f of the arithmetic device 12 in accordance with a predetermined format, on the basis of conditions set by the user using the input device 13, to the load calculation external program 16. The communication device 15 also acquires results of execution of the load calculation external program 16 from the information processing apparatus 100.

Means for communication between the communication device 15 and the load calculation external program 16 is not limited. The means for communication may be, for example, communication conforming to a communication protocol that is not open to the outside or communication conforming to a communication protocol that is open to the outside. The communication device 15 is a communication circuit that communicates with the information processing apparatus 100 through a network such as the Internet in accordance with a predetermined communication protocol. The communication protocol is, for example, Transmission Control Protocol/Internet Protocol (TCP/IP).

Load calculation external program 16

The load calculation external program 16 is a program for calculating a load of equipment in a target building on the basis of a condition set using the input device 13. In Embodiment 1, the actual load factor calculation unit 12a and the load factor estimation unit 12c calculate a load for an estimation period on the basis of operation data and measurement data.

In Embodiment 2, estimation of a load for an estimation period is performed using the load calculation external program 16. The load is calculated using the load calculation external program 16 so that an energy saving effect can be estimated even in the case where operation data and measurement data cannot be available. For example, Embodiment 2 can be applied to a case where an energy saving effect of equipment in a new building is estimated.

As in Embodiment 1, it is desirable that the load calculation external program 16 calculate the distribution of load factor frequencies of each system for each of a cooling operation period and a heating operation period so that data can be provided to the parameter estimation unit 12b and the power consumption estimation unit 12d and output results of the calculation.

However, the data is not necessarily provided in a format that can be processed by the load calculation external program 16, the parameter estimation unit 12b, and the parameter estimation unit 12b, and the external program result correction unit 12g may correct provided data into a format that can be processed inside the arithmetic device 12.

In Embodiment 2, an example in which a primary energy consumption calculation WEB program provided by Building Research Institute is used as the load calculation external program 16 will be described. Hereinafter, the primary energy consumption calculation WEB program will be referred to as a WEB program. The WEB program is a program that executes calculation by uploading a plurality of comma-separated values (CSV) files called "entry sheets" into which building information and equipment information are entered in accordance with an application programming interface (API), which is open to the public, and is able to download results of the calculation.

Facilities for which calculation based on the WEB program is to be performed include envelope performance of a building, air conditioning, ventilation, illumination, hot water supply, an elevator, and a facility for efficiency. The WEB program is able to evaluate the whole building including all the facilities for which calculation is to be performed and evaluate each facility. In Embodiment 2, the case where a result of air conditioning is obtained will be described.

Detailed information of a building and facilities needs to be entered into the entry sheet to be uploaded to the WEB program. The user may enter all the information necessary for load estimation processing by using the input device 13. Alternatively, the user may enter limited items, and typical numerical values may be used for the remaining items.

An input method called a "model building method" may be used for the WEB program. In the model building method, for a "model building" whose size, purpose, and other characteristics are defined in advance for each building purpose, calculation is performed by reflecting only specifications of the target building, envelope performance and equipment performance. In Embodiment 2, the case where the "model building method' is used will be described.

Input device 13

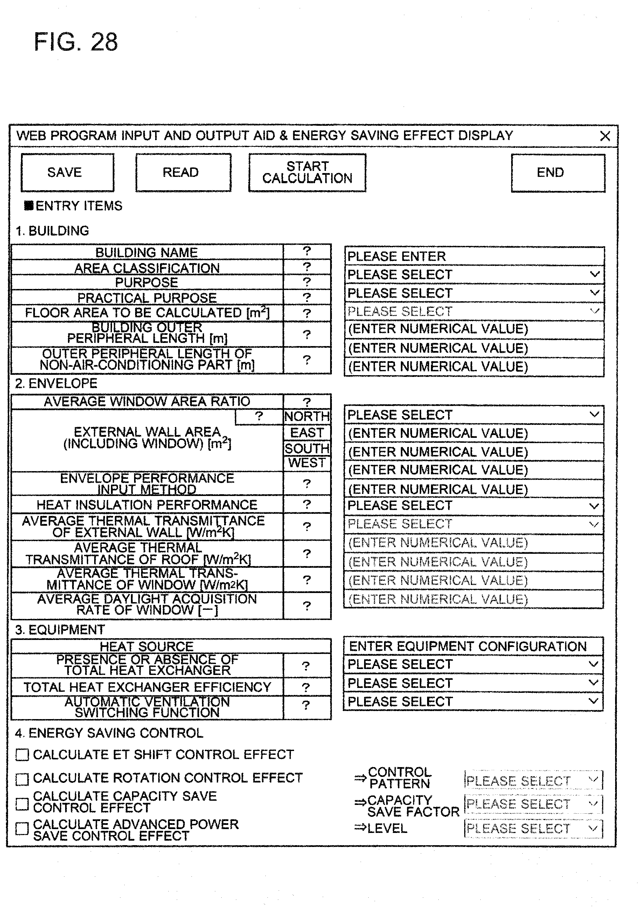

FIG. 28 is a diagram illustrating an example of an image displayed on the output device when the user enters data using the input device according to Embodiment 2. When the CPU 42 illustrated in FIG. 1 executes a browser software program, the output device 14 outputs the image illustrated in FIG. 28. The browser software program is stored in the storage device 11.

Referring to FIG. 28, input data regarding a building include a location area classification, a purpose, a floor area, a building outer peripheral length, and an outer peripheral length of a non-air-conditioning core part of the building. Input data regarding the envelope performance include an average window area ratio, external wall areas in individual directions, and heat insulation performance. As the heat insulation performance, a numerical value may be directly set or a heat insulation performance level (high, medium, or low) may be selected.

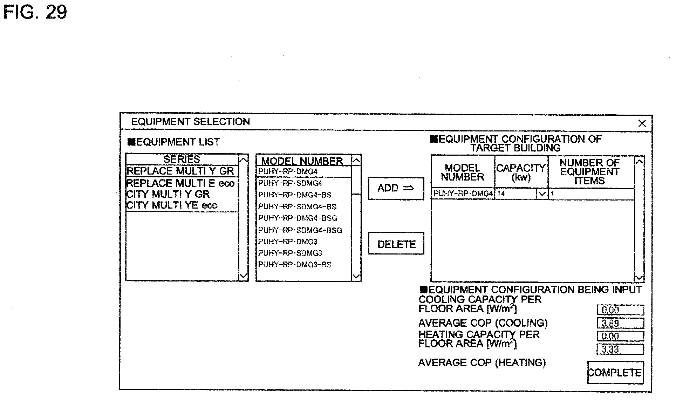

The numerical value of heat insulation performance is set automatically in accordance with setting or selection. Input data regarding equipment includes an equipment configuration of a heat source, presence or absence of a total heat exchanger, efficiency, and presence or absence of an automatic ventilation switching function. FIG. 29 is a diagram illustrating another example of an image displayed on the output device when the user enters data using the input device according to Embodiment 2.

FIG. 29 is an example of the image to be referred to by the user for selecting the equipment configuration of a heat source. The model name and capacity of the heat source are set from a list. It is desirable that, out of the input data conditions, at least a purpose of a building, a weather condition, heat insulation performance of the building, and an equipment configuration be set.

External program file generation unit 12f

The external program file generation unit 12f converts energy saving control and a condition into a format that can be executed by the information processing apparatus 100. Specifically, the external program file generation unit 12f enters a value set using the input device 13 into the entry sheet to be uploaded to the WEB program. In the case of the model building method, entry sheets are prepared in advance for individual building purposes, and values set using the input device 13 can be reflected in the prepared entry sheets.

External program result correction unit 12g

The external program result correction unit 12g converts a calculation result acquired from the API into a format that can be processed by the parameter estimation unit 12b and the power consumption estimation unit 12d. In the model building method, yearly generation times for heating and cooling calculated for each load factor band for an outside air temperature section and rated performance are output for a heat source corresponding to a zone defined for a model building. Thus, the external program result correction unit 12g converts a calculation result received from the information processing apparatus 100 into a load factor generation time for each indoor unit.

The information processing apparatus 1a according to Embodiment 2 includes the communication device 15 that uses the load calculation external program 16 to be executed by an external information processing apparatus 100, the external program file generation unit 12f, and the external program result correction unit 12g.

The external program file generation unit 12f converts energy saving control and a condition into a format that can be executed by the information processing apparatus 100. The external program result correction unit 12g receives a calculation result including a load factor distribution for an estimation target period for an energy saving effect from the information processing apparatus 100, and converts the calculation result into a predetermined format.

According to Embodiment 2, even without operation data and measurement data of equipment for which an energy saving effect is to be estimated, by providing a condition of a building or other things in which the equipment is installed to the information processing apparatus 100, the information processing apparatus 100 can perform processing for estimating a load including a load factor distribution. Thus, not only an effect similar to that obtained in Embodiment 1 but an energy saving effect of equipment whose operation data and measurement data are not available can also be estimated.

LIST OF REFERENCE SIGNS

| | |
|---|---|
| 1, 1a | information processing apparatus |
| 2 | controller |
| 3 | air-conditioning apparatus |
| 4 | outdoor unit |
| 5a, 5b | indoor unit |
| 6 | refrigerant pipe |
| 7, 7a | transmission line |
| 10 | air-conditioned space |
| 11 | storage device |
| 11a | equipment information |
| 11b | equipment characteristics table |
| 11c1 | operation data |
| 11c2 | measurement data |
| 11d | energy saving control menu |
| 11e | power consumption |
| 11f | energy saving effect |
| 12 | arithmetic device |
| 12a | actual load factor calculation unit |
| 12b | parameter estimation unit |
| 12c | load factor estimation unit |
| 12d | power consumption estimation unit |
| 12e | effect calculation unit |
| 12f | external program file generation unit |
| 12g | external program result correction unit |
| 13 | input device |
| 14 | output device |
| 15 | communication device |
| 16 | load calculation external program |
| 17 | external program execution unit |
| 21 | storage unit |
| 22 | arithmetic unit |
| 31 | compressor |
| 32 | flow switching device |
| 33 | heat-source-side heat exchanger |
| 34 | heat-source-side fan |
| 35a, 35b | expansion valve |
| 36a, 36b | use-side heat exchanger |
| 37a, 37b | use-side fan |
| 40, 40a, 40b | refrigerant circuit |
| 41 | memory |
| 42 | CPU |
| 51, 51a, 51b | refrigerant temperature sensor |
| 52, 52a, 52b | refrigerant temperature sensor |
| 53, 54 | pressure sensor |
| 61 | control characteristics correction parameter estimation part |
| 62 | load factor distribution estimation part |
| 63 | control characteristics correction part |
| 100 | information processing apparatus. |

**Claims**

1. An information processing apparatus (1) **characterized in that** it is connected to a controller (2) configured to control an air-conditioning apparatus (3) includes an outdoor unit (4) and an indoor unit (5a, 5b) as equipment, the outdoor unit (4) and the indoor unit (5a, 5b) forming a refrigerant circuit (40a) in which refrigerant circulates, comprising:

- a storage device (11) configured to store equipment information, an equipment characteristics table, and an energy saving control menu;

- an input device (13) configured to receive contents and a condition of energy saving control for which calculation is to be performed and acquire operation data and measurement data of the equipment from the controller (2);

- an arithmetic device (12) configured to calculate an energy saving effect of the equipment in accordance with the contents and the condition of the energy saving control; and

- an output device (14) configured to output the energy saving effect calculated by the arithmetic device (12), wherein the arithmetic device (12) includes

- an actual load factor calculation unit (12a) configured to obtain an actual load factor based on the operation data and the measurement data,

- a parameter estimation unit (12b) configured to obtain a control characteristics correction parameter associated with control characteristics of the equipment,

- a load factor estimation unit (12c) configured to obtain, for the indoor unit (5a, 5b), a two-dimensional frequency distribution indicating outside air temperature and a load factor on axes thereof, and estimate a load factor distribution for an estimation target period for the energy saving effect in accordance with the actual load factor,

- a power consumption estimation unit (12d) configured to correct the control characteristics in accordance with the control characteristics correction parameter and calculating, in accordance with the load factor distribution and the corrected control characteristics, a power consumption of the equipment for each of a case where the energy saving control is performed and a case where the energy saving control is not performed, and

- an effect calculation unit (12e) configured to calculate the energy saving effect in accordance with a calculation result obtained by the power consumption estimation unit (12d).

2. The information processing apparatus (1) of claim 1,

   wherein the air-conditioning apparatus includes a plurality of the indoor units (5a, 5b), and
   wherein the load factor estimation unit (12c) is configured to obtain the two-dimensional frequency distribution for each of the plurality of indoor units (5a, 5b).

3. The information processing apparatus of claim 1 or 2,
   wherein the output device (14) is configured to display the energy saving effect for a cooling operation period of the air-conditioning apparatus (3), the energy saving effect for a heating operation period of the air-conditioning apparatus (3), and a yearly energy saving effect of the air-conditioning apparatus, and to display, for each load factor band, an energy consumption for the cooling operation period, an energy consumption for the heating operation period, and a yearly energy consumption.

**Patentansprüche**

1. Informationsverarbeitungsvorrichtung (1), **dadurch gekennzeichnet, dass** sie mit einer Steuerung (2) verbunden ist, die dazu ausgelegt ist, eine Klimatisierungsvorrichtung (3) zu steuern, die eine Außeneinheit (4) und eine Inneneinheit (5a, 5b) als Ausrüstung beinhaltet, wobei die Außeneinheit (4) und die Inneneinheit (5a, 5b) einen Kältemittelkreislauf (40a) bilden, in dem Kältemittel zirkuliert,

   umfassend:

   - eine Speichereinrichtung (11), die dazu ausgelegt ist, Ausrüstungsinformationen, eine Ausrüstungseigenschaftstabelle und ein Energiesparsteuermenü zu speichern;
   - eine Eingabeeinrichtung (13), die dazu ausgelegt ist, Inhalte und eine Bedingung einer Energiesparsteuerung zu empfangen, für die eine Berechnung durchzuführen ist, und Betriebsdaten und Messdaten der Ausrüstung von der Steuerung (2) zu erfassen;
   - eine Recheneinrichtung (12), die dazu ausgelegt ist, eine Energiesparwirkung der Ausrüstung gemäß den Inhalten und der Bedingung der Energiesparsteuerung zu berechnen; und
   - eine Ausgabeeinrichtung (14), die dazu ausgelegt ist, die von der Recheneinrichtung (12) berechnete Energiesparwirkung auszugeben,

   wobei die Recheneinrichtung (12) Folgendes beinhaltet:

   - eine Berechnungseinheit (12a) für einen tatsächlichen Lastfaktor, die dazu ausgelegt ist, einen tatsächlichen Lastfaktor auf Grundlage der Betriebsdaten und der Messdaten zu erhalten,

- eine Parameterschätzeinheit (12b), die dazu ausgelegt ist, einen Steuereigenschaftskorrekturparameter zu erhalten, der Steuereigenschaften der Ausrüstung zugeordnet ist,

- eine Lastfaktorschätzeinheit (12c), die dazu ausgelegt ist, für die Inneneinheit (5a, 5b) eine zweidimensionale Frequenzverteilung zu erhalten, die eine Außenlufttemperatur und einen Lastfaktor auf Achsen davon angibt, und eine Lastfaktorverteilung für einen Schätzzielzeitraum für die Energiesparwirkung gemäß dem tatsächlichen Lastfaktor zu schätzen,

- eine Leistungsverbrauchsschätzeinheit (12d), die dazu ausgelegt ist, die Steuereigenschaften gemäß dem Steuereigenschafskorrekturparameter zu korrigieren und gemäß der Lastfaktorverteilung und den korrigierten Steuereigenschaften einen Leistungsverbrauch der Ausrüstung für jeden von einem Fall, in dem die Energiesparsteuerung durchgeführt wird, und einem Fall, in dem die Energiesparsteuerung nicht durchgeführt wird, zu berechnen, und

- eine Wirkungsberechnungseinheit (12e), die dazu ausgelegt ist, die Energiesparwirkung gemäß einem Berechnungsergebnis zu berechnen, das von der Leistungsverbrauchsschätzeinheit (12d) erhalten wird.

2. Informationsverarbeitungsvorrichtung (1) nach Anspruch 1,

   wobei die Klimatisierungsvorrichtung eine Vielzahl der Inneneinheiten (5a, 5b) beinhaltet und

   wobei die Lastfaktorschätzeinheit (12c) dazu ausgelegt ist, die zweidimensionale Frequenzverteilung für jede der Vielzahl von Inneneinheiten (5a, 5b) zu erhalten.

3. Informationsverarbeitungsvorrichtung nach Anspruch 1 oder 2,
   wobei die Ausgabeeinrichtung (14) dazu ausgelegt ist, die Energiesparwirkung für einen Kühlbetriebszeitraum der Klimatisierungsvorrichtung (3), die Energiesparwirkung für einen Heizbetriebszeitraum der Klimatisierungsvorrichtung (3) und eine jährliche Energiesparwirkung der Klimatisierungsvorrichtung anzuzeigen und für jedes Lastfaktorband einen Energieverbrauch für den Kühlbetriebszeitraum, einen Energieverbrauch für den Heizbetriebszeitraum und einen jährlichen Energieverbrauch anzuzeigen.

**Revendications**

1. Appareil de traitement d'informations (1) **caractérisé en ce qu'**il est connecté un contrôleur (2) configuré pour commander un appareil de conditionnement d'air (3) qui inclut une unité externe (4) et une unité interne (5a, 5b) en tant qu'équipement, l'unité externe (4) et l'unité interne (5a, 5b) formant un circuit de réfrigérant (40a) dans lequel un réfrigérant circule,

   comprenant :

   - un dispositif de stockage (11) configuré pour stocker des informations d'équipement, une table de caractéristiques d'équipement, et un menu de commande d'économie d'énergie ;
   - un dispositif d'entrée (13) configuré pour recevoir des contenus et une condition de commande d'économie énergie pour laquelle un calcul doit être effectué, et pour acquérir des données de fonctionnement et de mesurage de l'équipement depuis le contrôleur (2) ;
   - un dispositif arithmétique (12) configuré pour calculer un effet d'économie d'énergie de l'équipement en accord avec les contenus et la condition de la commande d'économie d'énergie ; et
   - un dispositif de sortie (14) configuré pour sortir l'effet d'économie d'énergie calculé par le dispositif arithmétique (12),

   dans lequel le dispositif arithmétique (12) inclut

   - une unité de calcul de facteur de charge réel (12a) configurée pour obtenir facteur de charge réel sur la base des données de fonctionnement et des données de mesurage,
   - une unité d'estimation de paramètre (12b) configurée pour obtenir un paramètre de correction de caractéristiques de commande associé à des caractéristiques de commande de l'équipement,
   - une unité d'estimation de facteur de charge (12c) configurée pour obtenir, pour l'unité interne (5a, 5b), une distribution de fréquence bidimensionnelle indiquant une température extérieure et un facteur de charge sur des axes de celle-ci, et pour estimer une distribution de facteur de charge pendant une période cible d'estimation pour l'effet d'économie d'énergie en accord avec le facteur de charge réel,

**EP 4 019 856 B1**

- une unité d'estimation de consommation de puissance (12d) configurée pour corriger les caractéristiques de commande en accord avec le paramètre de correction de caractéristiques de commande, et calculant, en accord avec la distribution de facteur de charge réel et les caractéristiques de commande corrigées, une consommation de puissance de l'équipement pour chacun d'un cas où la commande d'économie d'énergie est effectuée et d'un cas où la commande d'économie d'énergie n'est pas effectuée, et

une unité de calcul d'effet (12e) configurée pour calculer l'effet d'économie d'énergie en accord avec un résultat de calcul obtenu par l'unité d'estimation de consommation de puissance (12d).

2. Appareil de traitement d'informations (1) selon la revendication 1,

dans lequel l'appareil de conditionnement d'air inclut une pluralité d'unités internes (5a, 5b), et
dans lequel l'unité d'estimation de facteur de charge (12c) est configurée pour obtenir la distribution de fréquence bidimensionnelle pour chacune de la pluralité d'unités internes (5a, 5b).

3. Appareil de traitement d'informations selon la revendication 1 ou 2, dans lequel le dispositif de sortie (14) est configuré pour afficher l'effet d'économie d'énergie pendant une période opérationnelle de refroidissement de l'appareil de conditionnement d'air (3), l'effet d'économie d'énergie pendant une période opérationnelle de chauffage de l'appareil de conditionnement d'air (3), et un effet d'économie d'énergie annuel de l'appareil de conditionnement d'air, et pour afficher, pour chaque bande de facteur de charge, une consommation d'énergie pendant la période opérationnelle de refroidissement, une consommation d'énergie pendant la période opérationnelle de chauffage, et une consommation d'énergie annuelle.

FIG. 1

FIG. 2

# FIG. 3

INFORMATION PROCESSING APPARATUS — 1

STORAGE DEVICE — 11

EQUIPMENT INFORMATION — 11a

EQUIPMENT CHARAC-TERISTICS TABLE — 11b

OPERATION DATA — 11c1

MEASURE-MENT DATA — 11c2

ENERGY SAVING CONTROL MENU — 11d

POWER CONSUMPTION — 11e

ENERGY SAVING EFFECT — 11f

ARITHMETIC DEVICE — 12

ACTUAL LOAD FACTOR CALCULATION UNIT — 12a

PARAMETER ESTIMATION UNIT — 12b

CONTROL CHARACTERISTICS CORRECTION PARAMETER ESTIMATION PART — 61

LOAD FACTOR ESTIMATION UNIT — 12c

LOAD FACTOR DISTRIBUTION ESTIMATION PART — 62

POWER CONSUMPTION ESTIMATION UNIT — 12d

CONTROL CHARAC-TERISTICS CORRECTION PART — 63

EFFECT CALCULATION UNIT — 12e

OUTPUT DEVICE — 14

INPUT DEVICE — 13

CONTROLLER — 2

STORAGE UNIT — 21

ARITHMETIC UNIT — 22

AIR-CONDITIONING APPARATUS — 3

# FIG. 4

```
                  ( START )
                      │
                      ▼
        ┌───────────────────────────┐
        │   ACQUIRE OPERATION DATA   │    ST12a1
        │   AND EQUIPMENT INFORMATION│
        └───────────────────────────┘
                      │
                      ▼
        ┌───────────────────────────┐
        │ ACQUIRE, FOR EACH OUTDOOR  │
        │ UNIT, EQUIPMENT            │    ST12a2
        │ CHARACTERISTICS TABLE      │
        │ CORRESPONDING TO MODEL     │
        │ NUMBER OF COMPRESSOR AND   │
        │ MODEL NUMBER OF            │
        │ EXPANSION VALVE            │
        └───────────────────────────┘
                      │
                      ▼
        ┌───────────────────────────┐
        │   CALCULATE REFRIGERANT    │    ST12a3
        │ FLOW RATE FOR EACH OUTDOOR │
        │            UNIT            │
        └───────────────────────────┘
                      │
                      ▼
        ┌───────────────────────────┐
        │ CALCULATE Cv VALUE FOR EACH│    ST12a4
        │         INDOOR UNIT        │
        └───────────────────────────┘
                      │
                      ▼
        ┌───────────────────────────┐
        │ CALCULATE REFRIGERANT FLOW │
        │ RATE FOR EACH INDOOR UNIT  │    ST12a5
        │ ON THE BASIS OF AMOUNT OF  │
        │ REFRIGERANT FOR EACH       │
        │ OUTDOOR UNIT (SYSTEM)      │
        └───────────────────────────┘
                      │
                      ▼
        ┌───────────────────────────┐
        │ CALCULATE OUTLET AND INLET │
        │ SPECIFIC ENTHALPIES FOR    │    ST12a6
        │ EACH INDOOR UNIT ON THE    │
        │ BASIS OF SPECIFIC ENTHALPY │
        │ TABLE AND OPERATION DATA   │
        └───────────────────────────┘
                      │
                      ▼
        ┌───────────────────────────┐
        │ CALCULATE LOAD FOR EACH    │    ST12a7
        │         INDOOR UNIT        │
        └───────────────────────────┘
                      │
                      ▼
        ┌───────────────────────────┐
        │   CALCULATE LOAD FOR EACH  │    ST12a8
        │   OUTDOOR UNIT (SYSTEM)    │
        └───────────────────────────┘
                      │
                      ▼
        ┌───────────────────────────┐
        │ CALCULATE HOURLY AVERAGE   │    ST12a9
        │ OF LOAD OF EACH OUTDOOR    │
        │ UNIT (SYSTEM) AND HOURLY   │
        │ AVERAGE OF LOAD FOR EACH   │
        │ INDOOR UNIT                │
        └───────────────────────────┘
                      │
                      ▼
        ┌───────────────────────────┐
        │ CALCULATE LOAD FACTOR ON   │    ST12a10
        │ THE BASIS OF HOURLY AVERAGE│
        │ LOAD OF EACH OUTDOOR UNIT  │
        │ (SYSTEM) AND HOURLY AVERAGE│
        │ LOAD OF EACH INDOOR UNIT   │
        └───────────────────────────┘
                      │
                      ▼
                   ( END )
```

## FIG. 5

| FREQUENCY = 10 Hz | | LOW PRESSURE | | | | |
|---|---|---|---|---|---|---|
| | | 1 | 2 | 3 | 4 | 5 |
| HIGH PRESSURE | 10 | 20 | 18 | ... | | |
| | 20 | 16 | ... | | | |
| | 30 | ... | | | | |
| | 40 | | | | | |

| FREQUENCY = 30 Hz | | LOW PRESSURE | | | | |
|---|---|---|---|---|---|---|
| | | 1 | 2 | 3 | 4 | 5 |
| HIGH PRESSURE | 10 | 40 | 36 | ... | | |
| | 20 | 32 | ... | | | |
| | 30 | ... | | | | |
| | 40 | | | | | |

| FREQUENCY = 60 Hz | | LOW PRESSURE | | | | |
|---|---|---|---|---|---|---|
| | | 1 | 2 | 3 | 4 | 5 |
| HIGH PRESSURE | 10 | 60 | 54 | ... | | |
| | 20 | 48 | ... | | | |
| | 30 | ... | | | | |
| | 40 | | | | | |

## FIG. 6

| VALVE OPENING DEGREE | 80 | 90 | 100 | 110 | ... |
|---|---|---|---|---|---|
| Cv VALUE | 0 | 0.01 | 0.02 | ... | ... |

## FIG. 7

| CONDENSER OUTLET TEM-PERATURE | −10 | 0 | 10 | 20 | ··· |
|---|---|---|---|---|---|
| EVAPORATOR INLET SPECIFIC ENTHALPY | 200 | ··· | | | ··· |

## FIG. 8

| | | EVAPORATOR OUTLET TEMPERATURE | | | | |
|---|---|---|---|---|---|---|
| | | 1 | 2 | 3 | 4 | 5 |
| EVAPORATOR INLET TEM-PERATURE | 10 | 400 | 420 | ··· | | |
| | 20 | 420 | ··· | | | |
| | 30 | ··· | | | | |
| | 40 | | | | | |

## FIG. 9

| | | CONDENSER INLET TEMPERATURE | | | | |
|---|---|---|---|---|---|---|
| | | 20 | 30 | 40 | 50 | 60 |
| CONDENSER TEMPER-ATURE | −10 | 400 | 420 | ··· | | |
| | 0 | 420 | ··· | | | |
| | 10 | ··· | | | | |
| | 20 | | | | | |

## FIG. 10

| CONDENSER OUTLET TEM-PERATURE | −10 | 0 | 10 | 20 | ··· |
|---|---|---|---|---|---|
| CONDENSER OUTLET SPECIFIC ENTHALPY | 200 | ··· | | | |

FIG. 11

```
                    ┌─────────────┐
                    │    START    │
                    └──────┬──────┘
                           ▼
    ┌──────────────────────────────────────────┐
    │ ACQUIRE ACTUAL LOAD DATA, OPERATION DATA, │ ∿ ST12c1
    │        AND EQUIPMENT INFORMATION          │
    └──────────────────────┬───────────────────┘
                           ▼
    ┌──────────────────────────────────────────┐
    │ CREATE OUTSIDE AIR TEMPERATURE FREQUENCY  │ ∿ ST12c2
    │ DISTRIBUTION DURING ACTUAL LOAD DATA PERIOD│
    └──────────────────────┬───────────────────┘
                           ▼
    ┌──────────────────────────────────────────┐
    │ CREATE OUTSIDE AIR TEMPERATURE FREQUENCY  │ ∿ ST12c3
    │  DISTRIBUTION DURING ESTIMATION PERIOD    │
    └──────────────────────┬───────────────────┘
                           ▼
    ┌──────────────────────────────────────────┐
    │     CALCULATE SCALE FACTOR OF OUTSIDE     │
    │    AIR TEMPERATURE FREQUENCY DURING       │ ∿ ST12c4
    │        ESTIMATION PERIOD TO OUTSIDE       │
    │         AIR TEMPERATURE FREQUENCY         │
    │      DURING ACTUAL LOAD DATA PERIOD       │
    └──────────────────────┬───────────────────┘
                           ▼
    ┌──────────────────────────────────────────┐
    │  CREATE TWO-DIMENSIONAL FREQUENCY DIS-    │
    │ TRIBUTION OF INDOOR UNIT ACTUAL LOAD FACTOR│ ∿ ST12c5
    │ON THE BASIS OF ACTUAL LOAD FACTOR FOR EACH│
    │  INDOOR UNIT AND OUTSIDE AIR TEMPERATURE  │
    │      DURING ACTUAL LOAD DATA PERIOD       │
    └──────────────────────┬───────────────────┘
                           ▼
    ┌──────────────────────────────────────────┐
    │ CALCULATE FORMULA OF RELATION BETWEEN     │
    │  OUTSIDE AIR TEMPERATURE DURING ACTUAL    │ ∿ ST12c6
    │    LOAD DATA PERIOD AND ACTUAL            │
    │        INDOOR UNIT LOAD FACTOR            │
    └──────────────────────┬───────────────────┘
                           ▼
```

ST12c7

```
                    ╱────────────╲
                  ╱   DO OUTSIDE    ╲
                ╱    AIR TEMPERATURES ╲
              ╱  DURING ESTIMATION PERIOD INCLUDE ╲   YES
            ╱    OUTSIDE AIR TEMPERATURE OUTSIDE    ╲──────┐
            ╲  RANGE OF OUTSIDE AIR TEMPERATURES    ╱      │
              ╲    DURING ACTUAL LOAD              ╱       │
                ╲      DATA PERIOD?              ╱         │
                  ╲────────────────────────────╱          │
                           │ NO                            │
                           ▼                               ▼
```

ST12c8                                         ST12c9

```
    ┌──────────────────────────────┐   ┌──────────────────────────┐
    │  MULTIPLY INDOOR UNIT FREQUENCY│   │  CALCULATE INDOOR UNIT   │
    │ CALCULATED IN STEP ST12c5 BY   │   │   LOAD FACTOR USING      │
    │  SCALE FACTOR                  │   │   RELATION FORMA IN      │
    │  OBTAINED IN STEP ST12c4       │   │      STEP ST12c6         │
    └──────────────┬───────────────┘   └────────────┬─────────────┘
                   │                                 │
                   ▼◄────────────────────────────────┘
    ┌──────────────────────────────────────────┐
    │ MAKE ADJUSTMENT SUCH THAT TOTAL VALUE OF  │
    │ INDOOR UNIT LOAD FACTOR FREQUENCIES FOR    │
    │INDIVIDUAL OUTSIDE AIR TEMPERATURES DURING  │ ∿ ST12c10
    │ ESTIMATION PERIOD IS EQUAL TO FREQUENCIES  │
    │   OF OUTSIDE AIR TEMPERATURES DURING       │
    │           ESTIMATION PERIOD               │
    └──────────────────────┬───────────────────┘
                           ▼
                    ┌─────────────┐
                    │     END     │
                    └─────────────┘
```

## FIG. 12

| TIME | OUTSIDE AIR TEM-PERATURE [°C] | ACTUAL INDOOR UNIT LOAD FACTOR [%] | |
|---|---|---|---|
| | | IC1 | IC2 |
| 8:00 | 29.8 | 21.42857 | 44.64286 |
| 9:00 | 30.9 | 0 | 25 |
| 10:00 | 32.1 | 44.64286 | 64.28571 |
| 11:00 | 33 | 64.28571 | 32.14286 |
| 12:00 | 33.4 | 75 | 69.64286 |
| 13:00 | 33.6 | 62.5 | 75 |
| 14:00 | 33.4 | 83.92857 | 50 |
| 15:00 | 32.9 | 76.78571 | 60.71429 |
| 16:00 | 32.5 | 44.64286 | 32.14286 |
| 17:00 | 32 | 60.71429 | 51.78571 |
| 18:00 | 31.1 | 48.21429 | 28.57143 |
| 19:00 | 30.2 | 39.28571 | 25 |
| 20:00 | 29.1 | 0 | 8.928571 |

# FIG. 13

| TIME | OUTSIDE AIR TEMPER-ATURE [° C] |
|---|---|
| 8:00 | 29.8 |
| 9:00 | 30.9 |
| 10:00 | 32.1 |
| 11:00 | 33 |
| 12:00 | 33.4 |
| 13:00 | 33.6 |
| 14:00 | 33.4 |
| 15:00 | 32.9 |
| 16:00 | 32.5 |
| 17:00 | 32 |
| 18:00 | 31.1 |
| 19:00 | 30.2 |
| 20:00 | 29.1 |
| 8:00 | 27.5 |
| 9:00 | 28.8 |
| 10:00 | 30.1 |
| 11:00 | 30.9 |
| 12:00 | 31.6 |
| 13:00 | 31.8 |
| 14:00 | 31.5 |
| 15:00 | 31.1 |
| 16:00 | 30.7 |
| 17:00 | 29.7 |
| 18:00 | 28.7 |
| 19:00 | 27.9 |
| 20:00 | 27.3 |

## FIG. 14

## FIG. 15

## FIG. 16

| DATA SECTION OUTSIDE AIR TEMPERATURE [°C] | FREQUENCY OF OUTSIDE AIR TEMPERATURES | | SCALE FACTOR (INTEGER) | REMARKS |
|---|---|---|---|---|
| | OPERATION DATA PERIOD | ESTIMATIO PERIOD | | |
| 27 <, ≤ 28 | 0 | 3 | — | |
| 28 <, ≤ 29 | 0 | 2 | — | |
| 29 <, ≤ 30 | 2 | 3 | 1 | REMOVE DIGITS AFTER DECIMAL POINT |
| 30 <, ≤ 31 | 2 | 5 | 2 | REMOVE DIGITS AFTER DECIMAL POINT |
| 31 <, ≤ 32 | 2 | 6 | 3 | |
| 32 <, ≤ 33 | 4 | 4 | 1 | |
| 33 <, ≤ 34 | 3 | 3 | 1 | |

## FIG. 17

| INDOOR UNIT LOAD FACTOR [%] \ OUTSIDE AIR TEMPERATURE [°C] | 29 <, ≤ 30 | 30 <, ≤ 31 | 31 <, ≤ 32 | 32 <, ≤ 33 | 33 <, ≤ 34 |
|---|---|---|---|---|---|
| 0 | 1 | 1 | 0 | 0 | 0 |
| 0 <, ≤ 1 | 0 | 0 | 0 | 0 | 0 |
| 21 <, ≤ 22 | 1 | 0 | 0 | 0 | 0 |
| 39 <, ≤ 40 | 0 | 1 | 0 | 0 | 0 |
| 44 <, ≤ 45 | 0 | 0 | 0 | 2 | 0 |
| 48 <, ≤ 49 | 0 | 0 | 1 | 0 | 0 |
| 60 <, ≤ 61 | 0 | 0 | 1 | 0 | 0 |
| 62 <, ≤ 63 | 0 | 0 | 0 | 0 | 1 |
| 64 <, ≤ 65 | 0 | 0 | 0 | 1 | 0 |
| 74 <, ≤ 75 | 0 | 0 | 0 | 0 | 1 |
| 76 <, ≤ 77 | 0 | 0 | 0 | 1 | 0 |
| 83 <, ≤ 84 | 0 | 0 | 0 | 0 | 1 |

## FIG. 18

| INDOOR UNIT LOAD FACTOR [%] \ OUTSIDE AIR TEMPERATURE [°C] | 27 <, ≤ 28 | 28 <, ≤ 29 | 29 <, ≤ 30 | 30 <, ≤ 31 | 31 <, ≤ 32 | 32 <, ≤ 33 | 33 <, ≤ 34 |
|---|---|---|---|---|---|---|---|
| 0 | 3 | 1 | 1 | 3 | 0 | 0 | 0 |
| 0 <, ≤ 1 | 0 | 1 | 0 | 0 | 0 | 0 | 0 |
| 21 <, ≤ 22 | 0 | 0 | 2 | 0 | 0 | 0 | 0 |
| 39 <, ≤ 40 | 0 | 0 | 0 | 2 | 0 | 0 | 0 |
| 44 <, ≤ 45 | 0 | 0 | 0 | 0 | 0 | 2 | 0 |
| 48 <, ≤ 49 | 0 | 0 | 0 | 0 | 3 | 0 | 0 |
| 60 <, ≤ 61 | 0 | 0 | 0 | 0 | 3 | 0 | 0 |
| 62 <, ≤ 63 | 0 | 0 | 0 | 0 | 0 | 0 | 1 |
| 64 <, ≤ 65 | 0 | 0 | 0 | 0 | 0 | 1 | 0 |
| 74 <, ≤ 75 | 0 | 0 | 0 | 0 | 0 | 0 | 1 |
| 76 <, ≤ 77 | 0 | 0 | 0 | 0 | 0 | 1 | 0 |
| 83 <, ≤ 84 | 0 | 0 | 0 | 0 | 0 | 0 | 1 |

FIG. 19

START

ACQUIRE ESTIMATED LOAD DATA, PARAMETER, AND OPERATION DATA — ST12d1

SYSTEM LOAD > 0? — ST12d2

NO → FL1

YES

COOLING OPERATION? — ST12d3

NO → DETERMINE EVAPORATING TEMPERATURE — ST12d4

YES

EVAPORATING TEMPERATURE CONTROL? — ST12d6

NO → DETERMINE EVAPORATING TEMPERATURE — ST12d7

DETERMINE CONDENSING TEMPERATURE — ST12d5

YES

CALCULATE EVAPORATING TEMPERATURE BASED ON PARAMETER — ST12d8

CALCULATE CONDENSING TEMPERATURE BASED ON METEOROLOGICAL DATA — ST12d9

CALCULATE OUTLET AND INLET SPECIFIC ENTHALPIES FOR EACH INDOOR UNIT ON THE BASIS OF SPECIFIC ENTHALPY TABLES, EVAPORATING TEMPERATURE, AND CONDENSING TEMPERATURE — ST12d10

CALCULATE REFRIGERANT FLOW RATE BASED ON OUTLET AND INLET SPECIFIC ENTHALPIES AND ESTIMATED LOAD — ST12d11

CALCULATE HIGH PRESSURE AND LOW PRESSURE ON THE BASIS OF PHYSICAL PROPERTY DATA TABLE, EVAPORATING TEMPERATURE, AND CONDENSING TEMPERATURE — ST12d12

FL2

## FIG. 20

FL2

CALCULATE COMPRESSOR FREQUENCY
ON THE BASIS OF REFRIGERANT FLOW
RATE DATA TABLE, HIGH PRESSURE,
AND LOW PRESSURE — ST12d13

CALCULATE POWER CONSUMPTION OF
COMPRESSOR ON THE BASIS OF
COMPRESSOR POWER TABLE,
COMPRESSOR FREQUENCY,
HIGH PRESSURE, AND LOW PRESSURE — ST12d14

FL1

CALCULATE POWER CONSUMPTION OF
HEAT-SOURCE-SIDE FAN AND
CALCULATE POWER CONSUMPTION BY
ADDING CALCULATED POWER CON-
SUMPTION OF HEAT-SOURCE-SIDE FAN
AND POWER CONSUMPTION OF
COMPRESSOR — ST12d15

ST12d16

POWER
CONSUMPTION = 0

END

31

# FIG. 21

| FREQUENCY = 10 Hz | | LOW PRESSURE | | | | |
|---|---|---|---|---|---|---|
| | | 1 | 2 | 3 | 4 | 5 |
| HIGH PRESSURE | 10 | 0.1 | 0.2 | ... | | |
| | 20 | 0.3 | ... | | | |
| | 30 | ... | | | | |
| | 40 | | | | | |

| FREQUENCY = 30 Hz | | LOW PRESSURE | | | | |
|---|---|---|---|---|---|---|
| | | 1 | 2 | 3 | 4 | 5 |
| HIGH PRESSURE | 10 | 0.3 | 0.6 | ... | | |
| | 20 | 0.9 | ... | | | |
| | 30 | ... | | | | |
| | 40 | | | | | |

| FREQUENCY = 60 Hz | | LOW PRESSURE | | | | |
|---|---|---|---|---|---|---|
| | | 1 | 2 | 3 | 4 | 5 |
| HIGH PRESSURE | 10 | 0.6 | 1.2 | ... | | |
| | 20 | 1.8 | ... | | | |
| | 30 | ... | | | | |
| | 40 | | | | | |

# FIG. 22

| OUTDOOR UNIT LOAD FACTOR | 0 | 10 | 20 | 30 | ... |
|---|---|---|---|---|---|
| FAN POWER | 0 | 0.01 | ... | | |

## FIG. 23

| ENERGY SAVING EFFECT BASED ON OPERATION DATA | | | | X |
|---|---|---|---|---|

| SAVE | READ | START CALCULATION | | END |
|---|---|---|---|---|

| NAME OF BUILDING | PLEASE ENTER | | |
|---|---|---|---|
| ADDRESS OF BUILDING | PLEASE SELECT | | ∨ |
| EQUIPMENT INFORMATION FILE PATH | PLEASE SPECIFY | | BROWSE |
| OPERATION DATA FOLDER PATH | PLEASE SPECIFY | | BROWSE |
| TYPE OF METEOROLOGICAL DATA | PLEASE SELECT | | ∨ |
| METEOROLOGICAL DATA FILE PATH | PLEASE SPECIFY | | BROWSE |
| COOLING PERIOD [MONTHS] | PLEASE SELECT ∨ | ~ | PLEASE SELECT ∨ |
| HEATING PERIOD [MONTHS] | PLEASE SELECT ∨ | ~ | PLEASE SELECT ∨ |
| WORKING TIME [HOURS] | PLEASE SELECT ∨ | ~ | PLEASE SELECT ∨ |

☐ CALCULATE ET SHIFT CONTROL EFFECT

☐ CALCULATE ROTATION CONTROL EFFECT  ⇒ CONTROL PATTERN  | PLEASE SELECT ∨ |

☐ CALCULATE CAPACITY SAVE CONTROL EFFECT  ⇒ CAPACITY SAVE FACTOR  | PLEASE SELECT ∨ |

☐ CALCULATE ADVANCED POWER SAVE CONTROL EFFECT  ⇒ LEVEL  | PLEASE SELECT ∨ |

## FIG. 24

| RESULTS DISPLAY | X |
|---|---|

| SAVE | RETURN |
|---|---|

■ENERGY SAVING CONTROL EFFECT

| ET SHIFT | ROTATION | CAPACITY SAVE | ADVANCED |
|---|---|---|---|

ENERGY SAVING EFFECT (COOLING)

| COOLING | HEATING | YEARLY |

1.3%  YEARLY COOLING ENERGY

●COMMENTS●

EFFICIENCY INCREASE BY ET SHIFT FOR LOW LOAD IS EFFECTIVE

●EFFICIENCY INCREASE BY ET SHIFT FOR LOW LOAD IS EFFECTIVE●
CHECK THE DETAILS FROM HERE

ENERGY USE AMOUNT [kW]: 1200, 1000, 800, 600, 400, 200, 0

LOAD FACTOR[−]: 0, 0.1, 0.2, 0.3, 0.4, 0.5, 0.6, 0.7, 0.8, 0.9, 1, 1.1

▨ NORMAL OPERATION
▧ ET SHIFT OPERATION

| COMPARE WITH PREVIOUS RESULTS | | CALCULATION CONDITIONS |
|---|---|---|

## FIG. 25

RESULTS COMPARISON _____ X

| RETURN |

| COOLING | HEATING | YEARLY |

ENERGY SAVING CONTROL EFFECT [%]

| | ET SHIFT | ROTATION | CAPACITY SAVE | ADVANCED POWER SAVE |
|---|---|---|---|---|
| CURRENT RESULTS<br>CALCULATION CONDITIONS | 1.25 | 10:53 | — | — |
| LAST RESULTS<br>CALCULATION CONDITIONS | 1.25 | 4:30 | — | — |
| RESULTS BEFORE LAST | — | — | — | — |

## FIG. 26

CURRENT CALCULATION _____ X

| NAME OF BUILDING | test\| | | |
|---|---|---|---|
| ADDRESS OF BUILDING | KANAGAWA PREFECTURE | | |
| EQUIPMENT INFORMATION FILE PATH | C:¥workspace¥ ENERGY SAVING EFFECT ESTIMATION TOOL ¥src¥Datas¥ACI | | |
| OPERATION DATA FOLDER PATH | C:¥workspace¥ ENERGY SAVING EFFECT ESTIMATION TOOL ¥src¥Datas¥Mai | | |
| TYPE OF METEOROLOGICAL DATA | STANDARD DATA IS USED | | |
| METEOROLOGICAL DATA FILE PATH | SPECIFY | | |
| COOLING PERIOD [MONTHS] | 6 | ~ | 9 |
| HEATING PERIOD [MONTHS] | 10 | ~ | 2 |
| WORKING TIME [HOURS] | 8 | ~ | 18 |

☑CALCULATE ET SHIFT CONTROL EFFECT

☑CALCULATE ROTATION CONTROL EFFECT ⇒CONTROL PATTERN   | SIX MINUTES |

☐CALCULATE CAPACITY SAVE CONTROL EFFECT   ⇒CAPACITY SAVE FACTOR | |

☐CALCULATE ADVANCED POWER SAVE CONTROL EFFECT   ⇒LEVEL | |

# FIG. 27

# FIG. 28

| WEB PROGRAM INPUT AND OUTPUT AID & ENERGY SAVING EFFECT DISPLAY | X |
|---|---|

| SAVE | READ | START CALCULATION | END |
|---|---|---|---|

■ENTRY ITEMS

1. BUILDING

| | | |
|---|---|---|
| BUILDING NAME | ? | PLEASE ENTER |
| AREA CLASSIFICATION | ? | PLEASE SELECT ∨ |
| PURPOSE | ? | PLEASE SELECT ∨ |
| PRACTICAL PURPOSE | ? | PLEASE SELECT ∨ |
| FLOOR AREA TO BE CALCULATED [m²] | ? | (ENTER NUMERICAL VALUE) |
| BUILDING OUTER PERIPHERAL LENGTH [m] | ? | (ENTER NUMERICAL VALUE) |
| OUTER PERIPHERAL LENGTH OF NON-AIR-CONDITIONING PART [m] | ? | (ENTER NUMERICAL VALUE) |

2. ENVELOPE

| | | | |
|---|---|---|---|
| AVERAGE WINDOW AREA RATIO | | ? | |
| EXTERNAL WALL AREA (INCLUDING WINDOW) [m²] | ? | NORTH | PLEASE SELECT ∨ |
| | | EAST | (ENTER NUMERICAL VALUE) |
| | | SOUTH | (ENTER NUMERICAL VALUE) |
| | | WEST | (ENTER NUMERICAL VALUE) |
| ENVELOPE PERFORMANCE INPUT METHOD | ? | | (ENTER NUMERICAL VALUE) |
| HEAT INSULATION PERFORMANCE | ? | | PLEASE SELECT ∨ |
| AVERAGE THERMAL TRANSMITTANCE OF EXTERNAL WALL [W/m²K] | ? | | PLEASE SELECT ∨ |
| AVERAGE THERMAL TRANSMITTANCE OF ROOF [W/m²K] | ? | | (ENTER NUMERICAL VALUE) |
| AVERAGE THERMAL TRANS-MITTANCE OF WINDOW [W/m2K] | ? | | (ENTER NUMERICAL VALUE) |
| AVERAGE DAYLIGHT ACQUISITION RATE OF WINDOW [−] | ? | | (ENTER NUMERICAL VALUE) |
| | | | (ENTER NUMERICAL VALUE) |

3. EQUIPMENT

| | | |
|---|---|---|
| HEAT SOURCE | | ENTER EQUIPMENT CONFIGURATION |
| PRESENCE OR ABSENCE OF TOTAL HEAT EXCHANGER | ? | PLEASE SELECT ∨ |
| TOTAL HEAT EXCHANGER EFFICIENCY | ? | PLEASE SELECT ∨ |
| AUTOMATIC VENTILATION SWITCHING FUNCTION | ? | PLEASE SELECT ∨ |

4. ENERGY SAVING CONTROL

☐ CALCULATE ET SHIFT CONTROL EFFECT

☐ CALCULATE ROTATION CONTROL EFFECT        ⇒CONTROL PATTERN    PLEASE SELECT ∨

☐ CALCULATE CAPACITY SAVE CONTROL EFFECT    ⇒CAPACITY SAVE FACTOR    PLEASE SELECT ∨

☐ CALCULATE ADVANCED POWER SAVE CONTROL EFFECT    ⇒LEVEL    PLEASE SELECT ∨

FIG. 29

| EQUIPMENT SELECTION | ✕ |
|---|---|

■EQUIPMENT LIST

| SERIES |
|---|
| REPLACE MULTI Y GR |
| REPLACE MULTI E eco |
| CITY MULTI Y GR |
| CITY MULTI YE eco |

| MODEL NUMBER |
|---|
| PUHY-RP-DMG4 |
| PUHY-RP-SDMG4 |
| PUHY-RP-DMG4-BS |
| PUHY-RP-SDMG4-BS |
| PUHY-RP-DMG4-BSG |
| PUHY-RP-SDMG4-BSG |
| PUHY-RP-DMG3 |
| PUHY-RP-SDMG3 |
| PUHY-RP-DMG3-BS |

ADD ⇒

DELETE

■EQUIPMENT CONFIGURATION OF TARGET BUILDING

| MODEL NUMBER | CAPACITY (kw) | NUMBER OF EQUIPMENT ITEMS |
|---|---|---|
| PUHY-RP-DMG4 | 14 | 1 |

■EQUIPMENT CONFIGURATION BEING INPUT

COOLING CAPACITY PER FLOOR AREA [W/m²]  `0.00`

AVERAGE COP (COOLING)  `3.89`

HEATING CAPACITY PER FLOOR AREA [W/m²]  `0.00`

AVERAGE COP (HEATING)  `3.33`

COMPLETE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018182022 A
- JP 2009020824 A
- JP 2003070163 A